(19) Europäisches Patentamt
European Patent Office
Office européen des brevets

(11) Publication number : **0 089 665 B2**

(12) # NEW EUROPEAN PATENT SPECIFICATION

(45) Date of publication of the new patent specification : **02.09.92 Bulletin 92/36**

(51) Int. Cl.$^5$ : **H04N 5/32,** G03G 15/044

(21) Application number : **83102787.5**

(22) Date of filing : **21.03.83**

(54) **Subtraction processing method and apparatus for radiation images.**

(30) Priority : **20.03.82 JP 45473/82**
**20.03.82 JP 45475/82**
**05.07.82 JP 116457/82**
**09.07.82 JP 119297/82**
**17.08.82 JP 142499/82**
**04.11.82 JP 193769/82**

(43) Date of publication of application :
**28.09.83 Bulletin 83/39**

(45) Publication of the grant of the patent :
**08.10.86 Bulletin 86/41**

(45) Mention of the opposition decision :
**02.09.92 Bulletin 92/36**

(84) Designated Contracting States :
**BE DE FR GB NL**

(56) References cited :
**FR-A- 2 450 471**
**GB-A- 2 057 221**

(73) Proprietor : **FUJI PHOTO FILM CO., LTD.**
**210 Nakanuma Minami Ashigara-shi**
**Kanagawa 250-01 (JP)**

(72) Inventor : **Nakajima, Nobuyoshi c/o Fuji Photo Film Co., Ltd.**
**798 Miyanodai, Kaisei-machi**
**Ashigarakami-gun Kanagawa-ken (JP)**
Inventor : **Ooga, Akihiro c/o Fuji Photo Film Co., Ltd.**
**798 Miyanodai, Kaisei-machi**
**Ashigarakami-gun Kanagawa-ken (JP)**
Inventor : **Kato, Hisatoyo c/o Fuji Photo Film Co., Ltd.**
**798 Miyanodai, Kaisei-machi**
**Ashigarakami-gun Kanagawa-ken (JP)**
Inventor : **Komaki, Takao c/o Fuji Photo Film Co., Ltd.**
**798 Miyanodai, Kaisei-machi**
**Ashigarakami-gun Kanagawa-ken (JP)**
Inventor : **Kimura, Tsutomu c/o Fuji Photo Film Co., Ltd.**
**798 Miyanodai, Kaisei-machi**
**Ashigarakami-gun Kanagawa-ken (JP)**
Inventor : **Agano, Toshitaka c/o Fuji Photo Film Co., Ltd.**
**798 Miyanodai, Kaisei-machi**
**Ashigarakami-gun Kanagawa-ken (JP)**
Inventor : **Hishinuma, Kazuhiro**
**798 Miyanodai, Kaisei-machi**
**Ashigarakami-gun Kanagawa-ken (JP)**

(74) Representative : **Patentanwälte Grünecker, Kinkeldey, Stockmair & Partner**
**Maximilianstrasse 58**
**W-8000 München 22 (DE)**

EP 0 089 665 B2

Jouve, 18, rue Saint-Denis, 75001 PARIS

## Description

The invention relates to a subtraction processing method for radiation images according to which at least one stimulable phosphor sheet is exposed to a radiation transmitting through an object so as to form a radiation image of said object on said phosphor sheet, scanning said stimulable phosphor sheet with stimulating rays to convert said radiation image into light emitted from said stimulable phosphor sheet upon stimulation thereof, photoelectrically reading out the amounts of said emitted light and converting them into image signals.

The invention relates further to an apparatus for carrying out this method, comprising means for exposing at least one stimulable phosphor sheet to a radiation transmitted through an object, so as to form a radiation image of said object on said stimulable phosphor sheet, means for scanning said stimulable phosphor sheet with stimulating rays for converting said radiation image into light emitted from said stimulable phosphor sheet upon stimulation thereof, means for photoelectrically reading out the amounts of said emitted light and for converting them into image signals.

The invention starts from a processing method and an apparatus as known from FR-A-2 450 471. This document described as to how the gradation of a radiation image may be treated to improve the diagnostic efficiency and accuracy. Whilst this known method and apparatus represents certain improvements, the advantages achieved are limited due to the fact that only a single radiation image is treated.

Conventionally, a digital subtraction method is used for processing radiation images. In the method, two radiation images recorded under conditions different from each other are photoelectrically read out to obtain digital image signals which are then subjected to a subtraction processing with respect to the corresponding picture elements of the images, thereby to obtain a signal for forming an image of a specific structure contained in the radiation images. The method makes it possible to reproduce a radiation image of only the specific structure by use of the thus obtained signal.

Basically, there have heretofore been known two types of such subtraction processing method, i.e. the so-called time temporal (time difference) subtraction processing method and the so-called energy subtraction processing method. In the former method, an image of a specific structure is extracted by subtracting the digital image signal of an X-ray image obtained without injection of a contrast media from the digital image signal of an X-ray image in which the image of the specific structure is enhanced by the injection of a contrast media. In the latter method, an object is exposed to X-rays having energy distributions different from each other to obtain two X-ray images respectively containing the images of a specific structure recorded on the basis of the intrinsic X-ray energy absorption characteristics of the specific structure. Then, the two X-ray images are weighted appropriately, and subjected to subtraction to extract the image of the specific structure.

As the subtraction processing method, there has been known a method wherein an image of a specific structure (for example, an organ, the bone, the blood vessel, or the like) of human body is extracted by use of two or more X-ray photographic films to correctly diagnose the specific structure.

However, the aforesaid subtraction processing method using the X-ray photographic films is disadvantageous in that, since the X-ray photographic films generally exhibit non-linear gradation and a narrow latitude of exposure, it is impossible to obtain a subtraction image of high quality. Further, in this conventional subtraction processing method using the X-ray photographic films, one X-ray image is inverted, two X-ray photographic films are manually superposed one upon the other, and the subtracted image is recorded on a third photographic film. Therefore, it is not always possible to correctly superpose the X-ray images recorded on the two X-ray photographic films one upon the other and remove images other than the structure to be diagnosed, and it is very troublesome to match the positions of the X-ray photographic films to each other. Accordingly, the aforesaid subtraction processing method using the X-ray photographic films is not always effective for diagnosis and has not been used widely, except for a particular use.

Recently, the so-called digital subtraction processing method or digital radiography (hereinafter referred to as "DR") has attracted attention since, if the image data is a digital value, the subtraction processing can be conducted by use of a computer without using the troublesome photographic subtraction technique.

As the DR systems, there have heretofore been known GB-A-2 057 221 digital fluorography using an X-ray fluoroscopic camera comprising a combination of an image intensifier tube (I.I. tube) and a television camera, which is categorized as the aforesaid time difference subtraction processing method, and scanned projection radiography using a line sensor, which is categorized as the aforesaid energy subtraction processing method. In the digital fluorography, since an I.I. tube and a television camera are used, the image quality (particularly resolving power) in the scanning systems of these components is low. Further, since many signal conversion systems are used, the digital fluorography exhibits very low image quality and is practically unsatisfactory for obtaining detailed information of radiation images. The digital fluorography is also disadvantageous in that, since the recordable picture size is limited by the size of the light receiving face of the I.I. tube, the digital fluorography cannot be used for large objects.

In the scanned projection radiography, a line sensor is moved along an object and, at the same time, the energy level of the X-ray source is alternately changed for each scanning line so as to divide one image into two stripe-like components of high and low energy levels, respectively. The respective image signals thus obtained are then subjected to subtraction processing. Accordingly, the image resolving power decreases at least to half, and the scanned projection radiography exhibits very low image quality as in the case of the aforesaid digital fluorography.

Radiation images used for diagnostic purposes, such as those recorded on medical X-ray photographs, are required to exhibit particularly high resolving power and high image quality with respect to the image density and contrast. Although the aforesaid DR is a revolutionary technique from the viewpoint of the subtraction processing, it is practically unsatisfactory, and a need exists for drastic improvements thereof.

The problem to be solved by the invention as claimed is to provide a subtraction processing method for radiation images and an apparatus for carrying out the method which provide a subtraction processed image of markedly high image quality.

The solution of this problem in connection with the method is characterised by the characterizing features of claim 1 and claim 8 respectively.

The method and the apparatus according to the invention make it possible to obtain images having a high diagnostic effciency and accuracy. Furthermore, subtraction processed images of markedly high image quality may be quickly obtained in accordance with the invention.

The stimulable phosphor sheets used should preferably exhibit high resolving power and an extremely wide latitude of exposure to a radiation. A particular advantage offered by the invention is that large images can be obtained.

Advantageous embodiments of the invention are claimed by the subclaims.

The stimulable phosphor referred to in this invention means a phosphor which is able to store a part of radiation energy when exposed to a radiation such as X-rays, $\alpha$-rays, $\beta$-rays, $\gamma$-rays or ultraviolet rays, and then emits light in proportion to the stored energy of the radiation when exposed to stimulating rays such as visible light, as disclosed for example in U.S. Patent No. 4,258,264 (European Patent No. 7105).

As disclosed in U.S. Patent No. 4,258,264 (European Patent No. 7105) and Japanese Unexamined Patent Publication No. 56 (1981)-11395, it has been proposed to use a stimulable phosphor in a radiation image recording and read-out system. Specifically, the stimulable phosphor formed on a sheet is first exposed to a radiation transmitting through an object to have a radiation image stored therein, and is then scanned with stimulating rays such as laser beam which causes it to emit light in the pattern of the stored image. The light emitted from the stimulable phosphor sheet upon stimulation thereof is photoelectrically detected and converted to an electric image signal, which is processed as desired to reproduce a visible image on a recording medium such as photographic lightsenstive material or on a display such as cathode ray tube (CRT).

This radiation image system using the stimulable phosphor sheet is advantageous over the conventional radiography using a silver halide photographic material in that the image can be recorded over a very wide range (latitude) of radiation exposure and further in that the electric signal used for reproducing the visible image can be freely processed to improve the image quality for viewing, particularly diagnostic purposes. In more detail, since the amount of light emitted upon stimulation after the radiation energy is stored in the phosphor varies over a very wide range in proportion to the amount of energy stored therein, it is possible to obtain an image having desirable density regardless of the amount of exposure of the phosphor to the radiation by reading out the emitted light with an appropriate read-out gain and converting it to an electric signal to reproduce a visible image on a recording medium or a display. The electric signal may further be processed as desired to obtain a radiation image suitable for viewing, particularly diagnostic purposes. This is very advantageous in practical use.

As mentioned above, in the radiation image system using a stimulable phosphor, deviation of the level of the radiation energy stored in the stimulable phosphor from a desired level can easily be compensated by setting the read-out gain to an appropriate value when photoelectrically reading out the light emitted from the stimulable phosphor upon stimulation thereof. Therefore, the quality of the reproduced radiation image is not adversely affected by a change in radiation dose due to fluctuating tube voltage or MAS value of the radiation source, a variation in the sensitivity of the stimulable phosphor or the photodetector, a change in radiation dose according to the condition of the object, or a change in the radiation transmittance according to the object etc. Further, it is possible to obtain a desirable radiation image even when the radiation dose to the object is reduced. Further, it is possible to obtain a radiation image having high image quality of high contrast, high sharpness and low noise etc. by once converting the light emitted from the stimulable phosphor into an electric signal, and processing the electric signal as desired. Particularly, when the radiation image is used for medical diagnosis, it is possible to obtain a radiation image processed in accordance with the portion of a human body such as the heart, the chest etc. and improve the diagnostic efficiency and accuracy.

The present invention utilizing the radiation image recording and read-out system using the stimulable phosphor sheet has the advantage of the aforesaid DR, i.e. the advantage that it is possible to conduct a digital processing. Further, the present invention utilizing the aforesaid radiation image recording and read-out system can provide an image having markedly higher spatial resolution compared with the conventional DR since it is possible to decreasing the beam diameter of the stimulating rays (laser beam) employed for scanning the stimulable phosphor sheet, increase the number of picture elements per unit area, and directly record the final output of the image data obtained by the subtraction processing and various image processings on a light-sensitive material such as silver halide photographic material. Therefore, theoretically, it is possible to obtain a sharp subtraction image exhibiting a spatial resolution higher than the visual resolution of human eyes. Further, since there is no technical obstruction to make and use the larger size of the stimulable phosphor sheet, it is possible to obtain at one time a subtraction image over large area covering a wide range of portion of the human body. Thus, the present invention has many important features that the conventional DR does not possess.

In the present invention, the expression "exposed to a radiation transmitting through an object under conditions different from one another to have radiation images of said object stored in said stimulable phosphor sheets, at least a part of image information being different among said radiation images" embraces both of the aforesaid time difference subtraction and the energy subtraction, and means that a section corresponding to the portion of the blood vessel in angiography in the case of the time difference subtraction, or a section corresponding to the portion of an organ, bone, blood vessel or the like in the case of the energy subtraction is recorded on the two or more stimulable phosphor sheets under conditions different among the stimulable phosphor sheets. Namely, in the case of the time difference subtraction, radiation images of an object are recorded on two or more independent stimulable phosphor sheets before and after injection of a contrast medium into the object. In the case of the energy subtraction, radiation images of an object are recorded on discrete stimulable phosphor sheets by use of radiation energy levels different among the stimulable phosphor sheets.

In the case of the emergy subtraction, radiation images of an object should be recorded on discrete stimulable phosphor sheets by use of radiation energy levels different among the stimulable phosphor sheets. This may be achieved, for example, by sequentially exposing a plurality of stimulable phosphor sheets to a radiation source having the energy level of which is changed for the respective stimulable phosphor sheets, or by exposing a stack of a plurality of stimulable phosphor sheets with radiation energy-absorbing sheets interposed therebetween to a radiation all at once. The former method is advantageous in that images of the same magnification factor can always be obtained and energy discrimination can be effected distinctly and easily. However, from the viewpoint of the recording speed, the latter method is superior to the former method.

After the radiation images are recorded on the stimulable phosphor sheets, the radiation images are read out by use of stimulating rays. The recording step and the readout step may be repeated for each stimulable phosphor sheet. However, from the viewpoint of practical use, the recording step should desirably be conducted for a number of stimulable phosphor sheets necessary for the subtraction, and then the readout step be conducted collectively for all stimulable phosphor sheets. This procedure is desirable particularly when the recording step and the read-out step are performed at different locations, for example, when realizing a system wherein radiation images. are recorded on stimulable phosphor sheets in a movable X-ray diagnostic station and then read out from the stimulable phosphor sheets in a hospital.

The amounts of light emitted from the stimulable phosphor sheets carrying the radiation images stored therein when exposed to stimulating rays should preferably be converted to logarithmic digital signals. This is desired because unevenness (ununiformity) of the sensitivity of the stimulable phosphor sheets and fluctuation of energy of the radiation source, if any, can be ignored through the subtraction of the logarithmic values.

In the present invention, in order to improve the signal-to-noise ratio, it is preferable that the stimulable phosphor emits light having a wavelength range not overlapping upon the range of wavelength of the stimulating ray employed to excite the stimulable phosphor. Preferably, when a laser source which emits stimulating ray having a wavelength within thr range between 600 nm and 700 nm, such as a He-Ne laser, is used, a stimulable phosphor which emits light having a wavelength within the range between 300 nm and 500 nm should be selected, as disclosed in U.S. Patent No. 4,258,264.

Further, in order to increase the amount of light read out from the stimulable phosphor and shorten the read-out time, it is preferable to use a gas ion laser source emitting a laser beam having a wavelength range shorter than 600 nm, such as an $Ar^+$ laser beam (488 nm, 514.5 nm), a $Kr^+$ laser beam (520.9 nm, 530.9 nm, 568.2 nm), or an $Ar^+$-$Kr^+$ laser beam.

As the stimulable phosphor, for example, rare earth activated alkaline earth metal fluorohalide phosphor is preferred. One example of this phosphor is, as shown in DE-OS No. 2,928,245, a phosphor represented by the formula

$$(Ba_{1-x-y}, Mg_x, Ca_y)\ FX{:}aEu^{2+}$$

wherein X is at least one of Cl and Br, x and y are numbers satisfying

$$0<x + y \leqq 0.6 \text{ and } xy \neq 0,$$

and a is a number satisfying

$$10^{-6} \leqq a \leqq 5 \times 10^{-2}.$$

Another example of this phosphor is, as shown in U.S. Patent No. 4,239,968, a phosphor represented by the formula

$$(Ba_{1-x}, M^{II}_x)FX{:}yA$$

wherein $M^{II}$ is at least one of Mg, Ca, Sr, Zn and Cd, X is at least one of Cl, Br and I, A is at least one of Eu, Tb, Ce, Tm, Dy, Pr, Ho, Nd, Yb and Er, x is a number satisfying $0 \leqq x \leqq 0.6$, and y is a number satisfying $0 \leqq y \leqq 0.2$. Further, as the stimulable phosphor to be used in this invention can be used ZnS: Cu, Pb; $BaQ \cdot xAl_2O_3{:}Eu$ wherein $0.8 \leqq x \leqq 10$; and $M^{II}O \cdot xSiO_2{:}A$ wherein $M^{II}$ is Mg, Ca, Sr, Zn, Cd or Ba, A is Ce, Tb, Eu, Tm, Pb, Tl, Bi or Mn, and x is number satisfying $0.5 \leqq x \leqq 2.5$, as shown in U.S. Patent No. 4,236,078. Furthermore, as the stimulable phosphor can be used LnOX:xA wherein Ln is at least one of La, Y, Gd and Lu, X is at least one of Cl and Br, A is at least one of the Ce and Tb, x is a number satisfying $0<x<0.1$, as shown in U.S. Patent No. 4,236,078. Among the above enumerated phosphors, the rare earth activated alkaline earth metal fluorohalide phosphor is the most preferable, among which barium fluorohalides are the most preferable in view of the high intensity of emission of light. Further, barium fluorohalide phosphors added with a metal fluoride as disclosed in European Patent Publication No. 21,342, or barium fluoro-halide phosphors containing at least one of a metal chloride, a metal bromide and a metal iodide as disclosed in European Patent Publication No. 29,963 are also preferable because of their improved light emitting characteristics.

It is also desirable to color the phosphor layer of the stimulable phosphor sheet made of the above phosphor by use of pigments or dyes to improve the sharpness of the image obtained thereby as disclosed in European Patent Publication No. 21,174.

As for the signal processing, it is possible to employ a frequency processing as disclosed in U.S. Patent No. 4,315,318 or European Patent Publication No. 31,952, and a gradation processing as disclosed in U.S. Patent No. 4,302,672, 4,276,473 or 4,310,886.

The present invention will hereinbelow be described in further detail with reference to the accompanying drawings in which:

Figure 1A is a schematic view showing the first stage of radiation image recording step in the method in accordance with the present invention,

Figure 1B is a schematic view showing the second stage of the radiation image recording step in the method in accordance with the present invention,

Figure 1C is a schematic view showing two stimulable phosphor sheets carrying radiation images stored therein in the recording step conducted as shown in Figures 1A and 1B,

Figure 2 is a schematic view showing the step of causing each of the stimulable phosphor sheets shown in Figure 1C to emit light upon stimulation thereof in the pattern of the radiation image stored therein, photoelectrically converting the emitted light to obtain digital signals and conducting the subtraction processing of the digital signals,

Figure 3 is a schematic view showing the step of reproducing a subtraction processed image on a light sensitive film by use of the signal obtained by the subtraction processing,

Figure 4 is an explanatory view visually showing the X-ray images for diagnostic purposes before and after the subtraction processing in accordance with the present invention,

Figure 5 is a schematic view showing an example of recording of a marker on a stimulable phosphor sheet,

Figures 6 to 12 are schematic views showing various markers and the methods of detecting the markers,

Figure 13 is an explanatory view showing the correction of a rotation by approximately representing the picture elements by points,

Figure 14 is an explanatory view showing the interpolating operation in the correction of a rotation when the picture elements are assumed to be square,

Figure 15 is an explanatory view showing the distances between a picture element point A′ and four proximity picture element points moved by rotation operation when the picture elements are approximately by represented points,

Figure 16A, is an explanatory view showing the method of calculating the interpolation coefficients of type D when the picture elements are approximately by represented points,

Figure 16B is an explanatory view showing the method of Figure 16A by use of square picture elements,

Figures 17 to 19 are schematic views showing various embodiments of the read-out apparatus employed in the present invention,

Figure 20 is a schematic view showing another example of recording of a marker on a stimulable phosphor

sheet,

Figure 21 is a schematic view showing another embodiment of the read-out apparatus employed in the present invention,

Figures 22A and 22B are graphs showing the signal obtained by the read-out apparatus shown in Figure 21 in the case shown in Figure 20,

Figure 23 is a block diagram showing an embodiment of the signal processing apparatus employed in the present invention,

Figures 24A and 24B are explanatory views showing the signal processing conducted by the signal processing apparatus shown in Figure 23,

Figure 25 is a block diagram showing another embodiment of the signal processing apparatus employed in the present invention,

Figures 26A to 26C are schematic views showing further embodiments of the marker employed in the present invention,

Figures 27A and 27B are explanatory views showing an embodiment of the image size reduction processing conducted in accordance with the present invention,

Figure 28 is a graph showing an example of spatial frequency response for explanation of removal of high-frequency noise by image size reduction processing,

Figures 29A and 29B are explanatory views showing the arrangements of picture elements of a radiation image before and after another embodiment of the image size reduction processing is conducted,

Figures 30A and 30B are explanatory views showing the arrangements of picture elements of a radiation image before and after a further embodiment of the image size reduction processing is conducted,

Figure 31 is an explanatory view showing the step of conducting the image size reduction processing for a radiation image after the subtraction between radiation images to be subtraction processed,

Figure 32 is an explanatory view showing the step of conducting the image size reduction processing for radiation images before the subtraction,

Figure 33 is an explanatory view showing the step of creating an image frame at an unnecessary section occurring at the periphery of a subtraction processed image, and

Figure 34 is an explanatory view showing a method of measuring the thickness of the image frame.

Referring to Figures 1A and 1B, two stimulable phosphor sheets A and B are respectively exposed to X-rays 2 passing through an object 1 under conditions different from each other. For example, in the case of angiography (digital angiography) using the time difference subtraction, an X-ray transmission image of the object 1 before the injection of a blood vessel contrast medium thereto is recorded on the first stimulable phosphor sheet A as shown in Figure 1A. Then, a contrast medium is injected into the vein of the same object 1. After a certain period, for example after about 10 seconds in the case of the abdomen, an X-ray transmission image of the object is recorded in the same manner on the second stimulable phosphor sheet B as shown in Figure 1B. At both recording stages, the tube voltage of an X-ray source 3 is maintained at the same value, and the relationship between the positions of the object 1 and the stimulable phosphor sheet A is made equal to the relationship between the positions of the object 1 and the stimulable phosphor sheet B. Thus, two X-ray images of the same object 1 are recorded on the stimulable phosphor sheets A and B in exactly the same manner, except for the existence of the contrast medium in the object 1.

In the case of the energy subtraction, for example, the time interval between the recording stages shown in Figures 1A and 1B should be minimized as possible, and the stimulable phosphor sheets A and B are quickly replaced with each other. At the same time, the tube voltage of the radiation source 3 is changed to record two X-ray images of the same object 1 on the stimulable phosphor sheets A and B in exactly the same manner, except for the energy level of the X-rays transmitting through the object 1.

As described above, two radiation images wherein at least a part of the image information is different from each other are recorded on the stimulable phosphor sheets A and B. In the embodiment described above, two stimulable phosphor sheets A and B are used in order to later conduct the subtraction processing between two images. However, it is also possible to use three or more stimulable phosphor sheets such as A, B and C in order to later conduct the subtraction processing for the image signals obtained from the three or more sheets. In these cases, a superposing technique of the plurality of image signals disclosed in Japanese Patent Unexamined Publication Nos. 56(1981)-11399, 56(1981)-13934 and 56(1981)-11400 may be used together (for example, like A+B-C).

From the stimulable phosphor sheets A and B (shown in Figure 1C) carrying the X-ray images stored therein, the X-ray images are read out by use of the read-out apparatus shown in Figure 2.

In Figure 2 schematically showing an embodiment of the read-out apparatus employed in the present invention, a laser beam 11 emitted from a laser source 10 is one-dimensionally deflected in the direction of the arrow X by a light deflector 12 such as galvanometer mirror and directed onto the stimulable phosphor sheet

A. While the laser beam 11 impinges upon the stimulable phosphor sheet A, the stimulable phosphor sheet A is moved in the direction of the arrow Y (sub-scanning direction) and, consequently the whole area of the stimulable phosphor sheet A is exposed to and scanned with the laser beam 11. When exposed to the laser beam 11, the stimulable phosphor sheet A emits light in proportion to the X-ray energy stored therein, and the emitted light enters a light guiding sheet 14. The light guiding sheet 14 has a linear light input face positioned close to the scanning line on the stimulable phosphor sheet A, and a ring shaped light output face in close contact with the light receiving face of a photodetector 15, which may be a photomultiplier. The light guiding sheet 14 is formed of a transparent thermoplastic resin sheet such as an acrylic resin sheet so that the light entering from the light input face can be transmitted to the light output face by total reflection through the interior of the light guiding sheet 14. The light emitted from the stimulable phosphor sheet A upon stimulation thereof is guided in the interior of the light guiding sheet 14, emitted from the light output face of the light guiding sheet 14 and received by the photodetector 15. The light guiding sheet 14 may be of a shape and a material as disclosed in U.S. Patent Appln. Serial No. 105,240 (DE OS No. 2,951,501) or European Patent Publication No. 32,521.

The light receiving face of the photodetector 15 is provided with a filter for transmitting only the light having the wavelength distribution of the light emitted from the stimulable phosphor sheet A and cutting off the light having the wavelength distribution of the stimulating rays, so that the photodetector 15 can detect only the light emitted from the stimulable phosphor sheet A upon stimulation thereof. The output signal S of the photodetector 15 is sent to a signal processor 16 comprising an amplifier, an A/D converter or the like, and converter to a digital image signal $\log S_A$ of a logarithmic value (logS). The digital image signal $\log S_A$ is entered into a digital operation element 17 having a digital memory and stored therein.

Thereafter, the X-ray image stored in the other stimulable phosphor sheet B is read out therefrom in exactly the same manner as described above, and a digital image signal $\log S_B$ thus obtained is stored in the digital operation unit 17.

The digital operation unit 17 calculates the difference between the digital image signals $\log S_A$ and $\log S_B$ for each corresponding picture element, and conducts the digital subtraction processing. In the case of the time difference subtraction, the subtraction may simply be conducted. In the case of the energy subtraction, each digital image signal is multiplied by appropriate weight factors, and then subjected to the subtraction to erase a predetermined structure (for example, the bone) and obtain a signal for forming an image of only a desired specific structure (for example, the blood vessel or the organ).

The digital subtraction processing is conducted as described above. The signal thus obtained is used, for example, for reproducing a visible radiation image on a display or on a recording medium by the point by point scanning.

By way of example, Figure 3 shows the step of reproducing a visible radiation image on a recording medium by the scan recording method. In Figure 3, a light-sensitive film 20 is moved in the sub-scanning direction shown by the arrow Y, and at the same time a laser beam 21 is deflected onto the light-sensitive film 20 in the main scanning direction indicated by the arrow X. The laser beam 21 is modulated by an A/O modulator 22 with an image signal sent from an image signal feeder 23, thereby to form a visible image on the light-sensitive film 20. By using the output of the aforesaid digital operation unit 17 as the image signal sent from the image signal feeder 23, it is possible to reproduce a visible image of a desired specific structure obtained by the digital subtraction processing on the light-sensitive film 20.

Figure 4 shows the manner in which an image of a desired specific structure is obtained by the time difference subtraction processing by use of the method in accordance with the present invention. In Figure 4, a reference character 4A designates an image obtained from the first stimulable phosphor sheet A in which an X-ray image of the abdomen before the injection of a contrast medium thereto is stored. A reference character 4B designates an image obtained from the second stimulable phosphor sheet B in which an X-ray image of the same abdomen after the injection of a contrast medium thereto is stored. A reference character 4C denotes an image obtained after conducting the subtraction processing by subtracting a digital image signal representing the image 4A from a digital image signal representing the image 4B, so that only the blood vessel can be observed.

In the embodiment described above, since two stimulable phosphor sheets A and B are used and the subtraction processing is conducted to extract a desired specific structure, it is possible to obtain a subtraction processed image which exhibits markedly higher resolution than the resolution of the image obtained by the conventional method using an I.I. tube or a line sensor and which is practically very useful. Particularly, the embodiment described above provides a medical radiation image extremely valuable for diagnostic purposes, and therefore the embodiment greatly contributes to the medical field.

However, experiments conducted to obtain a subtraction image by the above-described method revealed that the method sometimes presents the problems described below.

Namely, when a subtraction image is obtained in the radiation image system using a stimulable phosphor sheet, two stimulable sheets (in some cases, three or more stimulable phosphor sheets) are sequentially or simultaneously inserted into an image recording table, radiation images to be subtraction processed are recorded on the stimulable phosphor sheets, the stimulable phosphor sheets carrying the radiation images stored therein are then inserted one by one into an image read-out apparatus, and the radiation images to be subtraction processed are read out from the stimulable phosphor sheets. During this course, even when the recording and the read-out are conducted very carefully, a shift and a rotation occur between the images to be subtraction processed. As a result, an image to be erased in the subtraction processing is not erased, or an image to be extracted is erased to develop an artifact. In this case, therefore, a correct subtraction image cannot be obtained, and a very real problem is presented with respect to diagnosis.

In the radiation image system using a stimulable phosphor sheet, a radiation image is stored as a latent image in the stimulable phosphor sheet. Therefore, when a deviation occurs between the radiation images stored in the stimulable phosphor sheets, the two X-ray images cannot be visually matched to each other, and it is not always possible to correct the deviation, unlike the X-ray photographic films on which X-ray images are recorded as visible images.

The shift and the rotation occurring between the radiation images stored in the stimulable phosphor sheets can be automatically corrected by

i) when each radiation image to be subtraction processed is recorded on each stimulable phosphor sheet, simultaneously recording a marker having such a shape as provides a reference point or a reference line to said stimulable phosphor sheet in a position fixed with respect to said radiation image,

ii) scanning said stimulable phosphor sheet carrying said radiation image stored therein with stimulating rays, and detecting the spatial coordinate of said reference point or said reference line provided by said marker from the digital image signals of said image detected from the light emitted from said stimulable phosphor sheet,

iii) conducting the steps (i) and (ii) for said two or more radiation images to be subtraction processed,

iv) calculating a rotation and a shift among said two or more radiation images based on the respective reference points or reference lines in said two or more deviation images to be subtraction processed,

v) when said rotation exists, rotating digitally either one of said radiation images to be subtraction processed, and/or,

when said shift exists, moving digitally either one of said radiation images to be subtraction processed, and

conducting a subtraction processing of the image data among the corresponding picture elements of said two or more radiation images to be subtraction processed.

The term "shift" as used herein means a longitudinal deviation or a transverse deviation of the radiation image of an object with respect to the stimulable phosphor sheet.

The term "marker" as used herein means a small area mark discriminable from a radiation image of an object on the stimulable phosphor sheet. Normally, the marker is recorded on the stimulable phosphor sheet in a position fixed with respect to the radiation image by use of a radiation shielding substance secured to the image recording table. In the present invention, at least one marker having such a shape as provides two or more reference points or reference lines is used.

Referring to Figure 5 showing an example of recording of a marker on a stimulable phosphor sheet, two circular marker forming members 102A and 102B made of a radiation shielding substance are secured to two marginal portions on an image recording table 101. At the radiation image recording step, X-rays are emitted from an X-ray source 104 positioned above the image recording table 101, and the marker forming members 102A and 102B are recorded, together with an object 103, on a stimulable phosphor sheet 105 positioned under the image recording table 101.

Since the marker forming members 102A and 102B secured to the image recording table 101 are recorded on the stimulable phosphor sheet 105 together with the stationary object 103, the relationship between the positions of markers 102A′ and 102B′ and an object image 103′ recorded on the stimulable phosphor sheet 105 does not change even when the recording is repeated by sequentially exchanging the stimulable phosphor sheet 105 with a new stimulable phosphor sheet to conduct a subtraction processing.

Accordingly, when separate stimulable phosphor sheets are sequentially or simultaneously inserted into the image recording table 101 to record different radiation images of the same object 103 on the stimulable phosphor sheets for the purpose of obtaining a subtraction image, the relationship between the positions of the markers 102A′ and 102B′ and the object image 103′ does not change even if the relative position of the object image 103′ deviates with respect to the stimulable phosphor sheet 105 and even if the relative position of stimulating rays used in the read-out step deviates with respect to the object image 103′.

Namely, it is possible to obtain a subtraction image of high quality by detecting the positions of the markers

recorded on the respective stimulable phosphor sheets 105, correcting a deviation in position occurring between the radiation images in terms of read out image data based on the detected marker positions, and conducting a subtraction processing.

The reference points or reference lines can be detected from the marker recorded on the stimulable phosphor sheet as described below.

When the marker is circular as shown in Figure 6, the reference point is the central point of the circle. In this case, therefore, it is possible to measure a ratation and a shift occurring between radiation images by using at least two circular markers. In order to detect the reference point, i.e. the central point of the circle from the circular marker, for example, the x coordinates $x_L$ and $x_R$ of the edge of the marker are detected by scanning the stimulable phosphor sheet with stimulating rays (in parallel with the x axis shown in Figure 6) and detecting the sudden changes in the amount of light emitted from the stimulable phosphor sheet at the edge portion of the marker. The x coordinate (xo) of the reference point can be calculated by

$$xo = (x_L + x_R)/2.$$

This operation is conducted for all scanning lines crossing the circle to increase the number of the xo sample values calculated by the above formula, and the average of all xo sample values is calculated to accurately obtain the coordinate of the center of the circle. In order to obtain the coordinate of the y coordinate of the center of the circle, scanning is conducted many times in the y direction and the similar operation may be conducted. Alternatively, in order to simplify the procedure, scanning may be conducted only in one direction, for example, only in the x direction, thereby to measure the x coordinate of the center of the circle as described above, and the y ccordinate of the scanning line on which the absolute value $|x_L - x_R|$ is the maximum (i.e. the diameter of the circle) may be taken as the y coordinate (yo) of the center of the circle. In order to accurately detect the coordinates (xo, yo) of the center of the circle employed as the reference point, 10 or more scanning lines should preferably intersect the circle.

Also for a hollow concentric circle marker as shown in Figure 7, the center coordinates of the marker can be calculated in the same manner as described above. In this case, since the number of the sample points (i.e. the number of the edge points to be detected) can be increased by conducting the above-mentioned procedure both for the outer circle and the inner circle of the marker, it is possible to obtain the center ccordinates more accurately. It is also advantageous to employ two L-shaped markers as shown in Figure 8. In this case, two reference points can be obtained from the two L-shaped markers by detecting the edge points of the markers, obtaining the equations of the straight lines constituting the respective L shapes by the method of least square, and calculating the coordinates of the intersecting points of the straight lines of the respective L shapes. Use of the L-shaped marker is advantageous since, even when only one L-shaped marker is employed, it is possible to obtain one reference point and one reference line. It is also advantageous to employ a frame-like marker extending along four sides of the area exposed by X-ray as shown in Figure 9. In this case, detection of the edges of the marker is simplified since the marker exists at the marginal portion of the image area. It is also possible to employ one rectangular marker as shown in Figure 10. One rectangular marker can provide four reference points and two reference lines.

In the present invention, any number of markers may be employed. However, it is advantageous to employ as many markers as possible since it is possible to avoid a failure of obtaining the reference points or reference lines by using some of the markers, for example, when they get out of the image area due to a large shift or a large angle of rotation. Further, the marker setting positions should preferably be spaced apart as far as possible since the distance between the reference points or the reference lines becomes large and an error due to fluctuation in the accuracy of detecting the reference points or the reference lines of the markers becomes small. Although the size of the marker is not limited, it will be selected appropriately So that it does not present an obstacle to the object image to be observed.

For example, when the circular marker shown in Figure 6 is read out at 5 cycles (i.e. five scanning lines/mm), the diameter of the circular marker should preferably 2 mm or more. A diameter of the circular marker within the range of 6 mm to 8 mm is sufficient even when the safety factor in edge detection is involved.

In the case of the rectangular marker recorded at the vicinity of the leading end of the stimulable phosphor sheet as shown in Figure 10, the shorter side of the marker should have a length corresponding to at least 10 scanning lines, and the longer side of the marker should preferably have a length corresponding nearly to the length of one side of the image area are in order to increase as much as possible the distance between two reference points at both ends of the longer side of the marker. For example, when one side of the image area in the direction approximately parallel to the longer side of the marker has the length corresponding to about 2,000 picture elements, the longer side of the marker should preferably have a length corresponding to at least 1,500 picture elements or more. Therefore, in a system which reads out by 5-cycle read-out scanning, the size of the rectangular marker should preferably be 300 mmx2 mm. Also for other types of the markers shown above etc. the distance between the reference points, or the length of the reference line should preferably be selected

as described above.

In the detection of the marker edge, it is not necessarily requird to detect all edge points of the

As the method of detecting the edge of the marker, the edge can be extracted, for example, by the first order differentiation (this may be for the difference between the adjacent picture elements) or by the second order differentiation as shown in Figure 11. Since the radiation image portion other than the portion like the edge of the marker artificially provided exhibits relatively small changes in the contrast, the marker edge can be easily discriminated from the other radiation image portion. Further, as shown in Figure 12, it is also possible to detect the edge of the marker by predetermining a region (surrounded by the dotted line in Figure 7) as follows: A density histgram for this region will be plotted and a threshold density will be obtained based on this histgram. Then the density of the marker will be separated from the density of the back ground, and the aforesaid first order differentiation, the second order differentiation, or the like be conducted.

The detection of the marker as described above may be conducted simultaneously with the storing of the radiation image read out as the digital image signals in the memory, or may be conducted by once storing the image signals in the memory and then reading out the image signals in the memory.

After the reference points or the reference lines of the marker are detected, correction values for the shift and the rotation are calculated. By way of example, calculations for the case wherein two markers respectively having one reference point as shown in Figure 1 are used are described below. When the correction of deviations is conducted by rotating one image A and shifting the other image B in the x and y directions with reference to the image after rotation, the correction value for the rotation is expressed by

$$\Delta\theta = \tan^{-1}\left(\frac{yB2-yB1}{xB2-xB1}\right) - \tan^{-1}\left(\frac{yA2-yA1}{xA2-xA1}\right),$$

the correction value for the shift of a reference point 1 in the x direction is expressed by

$$\Delta x1 = xB1 - \{(xA1 - Cx)\cos\Delta\theta - (yA1 - Cy)\sin\Delta\theta + Cx\},$$

the correction value for the shift of a reference point 2 in the x direction is represented by

$$\Delta x2 = xB2 - \{(xA2 - Cx)\cos\Delta\theta - (yA2 - Cy)\sin\Delta\theta + Cx\},$$

the correction value for the shift of the reference point 1 in the y direction is represented by

$$\Delta y1 = yB1 - \{(xA1 - Cx)\sin\Delta\theta + (yA1 - Cy)\cos\Delta\theta + Cy\},$$

and the correction value for the shift of the reference point 2 in the y direction is expressed by

$$\Delta y2 = yB2 - \{(xA2 - Cx)\sin\Delta\theta + CyA2 - Cy)\cos\Delta\theta + Cy\}$$

wherein (xA1, yA1,) designates the coordinates of the reference point 1 of the image A, (xA2, yA2) designates the coordinates of the reference point 2 of the image A, (xB1, yB1) denotes the coordinates of the reference point 1 of the image B, (xB2, yB2) denotes the coordinates of the reference point 2 of the image B, Cx designates the x coordinate of the center of rotation (arbitrary), and Cy designates the y coordinate of the center of rotation (arbitrary).

In the above-mentioned formulae, two kinds of correction values for the shift, i.e. $\Delta x1$ and $\Delta x2$, $\Delta y1$ and $\Delta y2$ are derived. These values are not always equal to each other. This is because, in many cases, the accuracy of detecting the reference points or the reference lines detected by the above-described detection method for the marker edge will not increase above the accuracy limited by the spatial frequency, and therefore there is a possibility of the occurrence of a sampling error. However, for (xA1, yA1), (xB1, yB1), (xA2, yA2), and (xB2, yB2) calculate extremely accurately, the influence of the sampling error is extremely small, and the sampling error scarcely presents a problem. Normally, therefore, as the correction values can be taken the average values expressed by the formulae of

$$\Delta x = (\Delta x1 + \Delta x2)/2 \text{ and } \Delta y = (\Delta 1 + \Delta y2)/2.$$

The number of the significant digits of $\Delta\theta$ depends on the desired rotation accuracy of the picture element to be rotated. Although $\Delta x$ and $\Delta y$ are normally not integers, the image quality of the finally obtained image is scarcely affected even when these values are handled as integers by half-adjust. It is also possible to use the fractions below the decimal point by interpolation.

The calculation of the correction values is not limited to the above-described method, and various other calculation methods may also be employed. For example, it is also possible to employ a calculation method wherein correction of the shift is conducted, and then correction of the rotation is carried out.

On the basis of the correction values calculated as described above, one of the two images to be subtraction processed is rotated to correct the rotation, the shift in both x and y direction is corrected, and subtraction is conducted between the corresponding picture elements. The correction of the deviations of the images will hereinbelow be described in further detail.

i) Correction of rotation

Figure 13 is an explanatory view showing the correction of a rotation by approximately expressing the

picture elements by grid points.

The image rotation is conducted based on the rotation $\Delta\theta$ obtained by detecting the reference points or the reference lines of the markers. When a point A(x, y) on the two-dimensional image grid point system as shown in Figure 13 is considered as an objective point, the present coordinate values of the point A′ (x, y) which should be positioned at the coordinates of the point A (x, y) after the rotation are calculated by the conversion formulae of

$$X = x\cos\Delta\theta + y\sin\Delta\theta \quad (1)$$
$$Y = -x\sin\Delta\theta + y\cos\Delta\theta$$

That is, basically, the image signal value $S_A'$ of A′ may be substituted for the image signal value $S_A$ of A. However, as is clear from Figure 13, image signal value does not necessarily exist on the coordinate value calculated by the Formulae (1). Therefore, as the image signal value of A′, it is necessary to use a value obtained by interpolating with the image signals of the grid points existing around A′. This will hereinbelow be explained in further detail by use of actual picture elements.

Figure 14 is an explanatory view showing the interpolating operation for the correction of the rotation when the shape of the picture elements are assumed to be square. When the picture element A′ is superposed upon picture elements a, b, c and d as a result of the rotation conversion, areas Wa, Wb, Wc and Wd over which the picture element A′ is superposed upon the picture elements a, b, c and d, respectively, are calculated and normalized by

$$Wa + Wb + Wc + Wd = 1.$$

In this case, it is necessary to substitute the weighted mean value expressed by the formula of

$$S_A' = Wa \cdot Sa + Wb \cdot Sb + Wc \cdot Sc + Wd \cdot Sd$$

wherein Sa, Sb, Sc and Sd designate the image signal values of the picture elements a, b, c and d, respectively, for the image signal value $S_A'$ of the picture element A′. The interpolating operation method has been explained above for the case wherein the picture element A′ is superposed on four proximity picture elements as shown in Figure 9. However, there can be various instances where the picture element A′ is superposed on five picture elements, six picture elements, and so on, and the manner of superposition is not alway same.

The method of conducting strictly area calculations to carry out rotation conversion of one picture element as described above is not always practicable since an indefinite number of manners of superposition must be discriminated and extremely troublesome and time consuming processings are required. (It will take several hours to several days for a large computer to conduct the processings, depending on the amount of the image data handled). Accordingly, in order to simplify the interpolating operation and quickly conduct the rotation conversion, the inventors developed four approximate interpolating operation methods and evaluated these methods.

Type A:

Of the four picture elements a, b, c and d surrounding the picture element A′, the picture element nearest to the picture element A′ is selected. The image signal value of the selected point is substituted for the image signal value $S_A'$ of the picture element A′ calculated by Formulae (1). (In Figure 13, SA′=Sa).

Type B:

Weight coefficients Wa, Wb, Wc and Wd are selected in advance so that, of the four picture elements a, b, c and d surrounding the picture element A′, the picture element nearest to the picture element A′ has the largest weight coefficient. Image signal values Sa, Sb, Sc and Sd of the four picture elements a, b, c and d are multiplied respectively by the weight coefficients Wa, Wb, Wc and Wd to obtain the weighted mean value, and the weighted mean value thus obtained is substituted for the image signal value $S_A'$ of the picture element A′. Namely,

$$SA' = (Wa \cdot Sa + Wb \cdot Sb + Wc \cdot Sc + Wd \cdot Sd)/Wtot$$

wherein

$$Wtot = Wa + Wb + Wc + Wd.$$

Type C:

Figure 15 is an explanatory view showing the distances between the picture element A′ and four proximity picture elements moved by rotation when the picture elements are approximately represented by points.

As shown in Figure 15, distances la, lb, lc and ld between the picture element A′ and the four picture elements a, b, c and d surrounding the picture element A′ are calculated. Reciprocals 1/la, 1/lb, 1/lc and 1/ld

of the respective distances are selected as the weight coefficients, and the picture element signal values Sa, Sb, Sc and Sd of the four picture elements a, b c and d are respectively multiplied by the weight coefficients to obtain the weighted mean value. The weighted mean value thus obtained is substituted for the image signal value $S_A'$ of the picture element A'. Namely,

$$S_A' = 1/la \cdot Sa + 1/lb \cdot Sb + 1/lc \cdot Sc + 1/ld \cdot Sd)/Wtot$$

wherein

$$Wtot = 1/la + 1/lb + 1/lc + 1/ld.$$

Type D:

Figure 16A is an explanatory view showing the method of calculating the interpolation coefficients of type D when the picture elements are approximately represented by points, and Figure 16B is an explanatory view showing the method of Figure 16A by use of square picture elements.

As shown in Figures 16A and 16B, at the step of calculating the areas over which the picture elements A' is superposed upon the four picture elements a, b, c and d, the areas are calculated in such a manner that the intersection angle between the picture element A' and each of the picture elements a, b, c and d is approximately assumed to zero. The areas thus obtained are employed as the weight coefficients for the picture elements a, b, c and d. The image signal values Sa, Sb, Sc and Sd of the four picture elements are multiplied by the weight coefficients to obtain the weighted mean value, and the weighted mean value thus obtained is substituted for the image signal value $S_A'$ of the picture element A'. Namely,

$$S_A' = Wa \cdot Sa + Wb \cdot Sb + Wc \cdot Sc + Wd \cdot Sd$$

wherein

$Wa=(1-y) \cdot (1-x)$, $Wb=y \cdot (1-x)$, $Wc=x, y$, and $Wd=(1-y) \cdot x$ in the case shown in Figures 16A and 16B.

For the above-mentioned four types of interpolating operation method, the image quality of the subtraction images obtained and the operation time were evaluated.

The results were as shown in Table 1.

TABLE 1

| | Operation time | Image quality |
|---|---|---|
| Type A | 1 (5 minutes) | 4 |
| Type B | 2 (8 " ) | 3 |
| Type C | 4 (25 " ) | 2 |
| Type D | 3 (11 " ) | 1 |

* The operation time was evaluated by the grade number of 1 to 4 in the order of shorter time.
* The image quality was evaluated by the grade number of 1 to 4 in the order of excellent image quality when visually estimated.
* Coefficients in type B were Wa=4, Wb=2, Wc=1.
* The operation time was the CPU operation time required for FACOM M160 to calculate for 2000×1700 picture elements.

Evaluation of the above-mentioned four operation processing methods with respect to the image quality and the operation time shown that type D is most excellent because of relatively short operation time and high image quality.

Specifically, in type A, an artifact develops for a radiation image having linear-like patterns wherein there is a large change in contrast, for example, for an image of the edge portion of the bone, and adversely affects the image quality. However, since the operation time is short, type A is effective for a radiation image wherein the change in contrast is small.

In type B, the degree of occurrence of artifact reduces compared with type A. Weight coefficients of Wa=4, Wb=Wd=2 and Wc= 1 were used, since, in this system, images of highest image quality could be obtained by use of these weight coefficients.

In type C, the image quality is almost the same as the image quality in type B, and only the operation time

increases.

Type D provides most excellent images although the operation time somewhat increases compared with type A and type B. This is because, in this system, the rotation is normally is only about 2°, and almost same results as those of the calculation using the strict area ratios can be obtained with the area ratios approximately calculated by the simple method by assuming that the angles of the aforesaid picture element A' with respect to the picture elements a, b, c and d are zero. (The operation time shown in Table 1 can further be shortened by using a special processing unit suitable for this rotation method).

By way of example only, the technique of obtaining the image data SA of a picture element A by the interpolation using the image data values Sa, Sb, Sc, and Sd of the four picture elements moving to the positions proximate to the picture element A has been described above. Conversely, it is also possible to employ the image signal values Sa, Sb, Sc and Sd of four picture elements proximate to the position to which the image signal value SA of the aforesaid picture element A shifts as a result of rotation, and cumulate the proportional distribution values expressed by the formulae of

$$Sa = (Wa/Wtot)\ S_A$$
$$Sb = (Wb/Wtot)\ S_A$$
$$Sc = (Wc/Wtot)\ S_A$$
$$Sd = (Wd/Wtot)\ S_A$$

on the image signal values Sa, Sb, Sc and Sd by using the aforesaid weight coefficients Wa, Wb, Wc and Wd.

Further, in the above-described technique, the image signal value on the coordinate system before rotation is calculated by interpolation based on the image signal value of the coordinate system after rotation. Conversely, it is also possible to calculate by interpolation the image signal value on the coordinate system after rotation based on the image signal value on the coordinate system before rotation in accordance with the similar interpolating technique.

Correction of the shift, i.e. the deviation in the x and y directions will now be described below.

ii) Correction of shift

When the shift values $\Delta x$ and $\Delta y$ are not integers, they are handled as integers by half-adjust or an image signal value is newly obtained by calculating the weighted mean value based on the image signal values of the adjacent picture elements, and either one of the radiation images to be subtraction processed is translated in parallel.

The rotational and the shift are corrected as described above, and then subtracting operation is conducted.

The subtracting operation is conducted by performing subtraction between the corresponding picture elements of two radiation images. It should be understood that the subtraction may be carried out according to the formula shown below, thereby to change the linear gradation and raise or lower the density level of the whole image. However, the operation should preferably be carried out after the logarithmetic conversion of the image signal of the light emitted from the stimulable phosphor. This is because band compression of the original image signal value is thereby achieved, and complete removal of unnecessary image information becomes possible.

$$Ssub = as1 - bs2 + c$$

wherein Ssub designates the subtraction image signal value, s1 and s2 designate the image signal value of the radiation images to be subtraction processed, c is the constant, and a and b are the constants (a=b in the temporal (time difference) subtraction, or a and b are coefficients determined according to the absorption factor of the structure to be extracted in the energy subtraction).

In the embodiments described above, the correction of the shift is conducted after the correction of the rotation. However, it is also possible to carry out the correction of the rotation after the correction of the shift, or to simultaneously carry out both corrections by performing the aforesaid subtracting operation while the corresponding picture elements are obtained based on $\Delta x$ and $\Delta y$.

Further, when the rotation exists, but the shift does not exist, it is possible to carry out only the correction of the rotation. When the shift exists, but the rotation does not exist, only the correction of the shift may be conducted. When the rotation and the shift do not exist, it is possible to directly carry out the subtracting operation based on the read out data without conducting the correction of deviation.

By subjecting the subtraction image obtained as described above to various signal processings such as processing of frequency response, gradation processing, arithmetic averaging processing, image size reduction processing and image size enlargement processing, it is possible to obtain a subtraction image having high contrast resolution and high spatial resolution and suitable for viewing, particularly diagnostic purposes. The aforesaid various signal processings may be conducted for the radiation images before the subtraction processing.

The subtraction image obtained as described above is reproduced as a visible image on a recording material such as photographic light-sensitive material, or on a CRT.

While the subtraction processing method in accordance with the present invention has been described above for the cases wherein the subtraction image is obtained from two radiation images, a subtraction image can similarly be obtained also from three or more radiation images in accordance with the present invention.

The embodiments described above can provide a subtraction processed image of very high image quality. In general, however, it will take much time for the operation to be conducted digitally to achieve correction of deviations. Thus, it will sometimes happen that the above-described embodiments are not practicable unless a large computer or a special-purpose operation processing unit exhibiting high operation speeds is used.

In order to obtain a subtraction processed image corrected for deviations in a short operation period, the method described below can be employed.

Namely, it is possible to employ a method comprising the steps of:

i) when each radiation image to be subtraction processed is recorded on each stimulable phosphor sheet, simultaneously recording a marker having such a shape as provides a reference point or a reference line to said stimulable phosphor sheet in a position fixed with respect to said radiation image,

ii) scanning said stimulable phosphor sheet carrying said radiation image stored therein with stimulating rays, and detecting the position coordinate of said reference point or said reference line of said marker detected from the light emitted from said stimulable phosphor sheet,

iii) moving said stimulable phosphor sheet with respect to scanning lines of stimulating rays based on said detected position coordinate and positioning said stimulable phosphor sheet in a position predetermined with respect to said scanning lines of stimulating rays, and thereafter

iv) reading out said radiation image.

The method just described above can correct deviations very quickly (in a period within the range of 10 to 30 seconds).

In this method, the step of moving the stimulable phosphor sheet with respect to the scan stimulating rays and positioning said stimulable phosphor sheet in a position predetermined with respect to the scanning lines of stimulating rays can be achieved, for example, by moving only the stimulable phosphor sheet by use of guide members, by moving a readout stage on which the stimulable phosphor sheet is placed, by changing the position of the scanning lines of the stimulating rays for scanning the stimulable phosphor sheet by the optical system, or the like.

Detection of the position coordinate of the marker can be conducted by preliminary read-out for reading out the radiation image stored in the stimulable phosphor sheet prior to final read-out for obtaining a visible image for viewing, particularly diagnostic purposes, as disclosed in published (27.4.83) European Patent Application 00 77 677, or can be simultaneously conducted at the final read-out step.

However, when detection of the position coordinate of the marker and correction of deviations are conducted simultaneously with the final read-out, it is necessary to employ a marker having a shape defining an edge portion or portions the radiation image area. As the marker of this type, it is possible to employ a marker as shown, for example, in Figure 8, 9, 26A, 26B or 26C.

This method will hereinbelow be described in further detail with reference to the accompanying drawings.

Figure 17 shows an embodiment of the read-out apparatus wherein the stimulable phosphor sheet is moved with respect to the scanning lines of stimulating rays by the shifting and/or rotating the read-out stage so as to locate the position coordinate of the marker in a position predetermined with respect to the scan stimulating rays.

In Figure 17, a stimulable phosphor sheet 201 carrying a radiation image stored therein is placed on a read-out stage 203 by a feed belt 202. The stimulable phosphor sheet 201 placed on the read-out stage 203 is then conveyed by a conveyer belt 204, and the leading end portion of the stimulable phosphor sheet 201 is scanned with stimulating rays 206 emitted from a laser source 205. When the leading end portion of the stimulable phosphor sheet 201 is scanned with the stimulating rays 206, the markers recorded at the leading end portion are read out by a photodetector 207 as light emission. After the markers are read out, the conveyer belt 204 is once stopped. From the markers thus read out, the position coordinates of the reference points provided by the markers are detected by use of a computer in accordance with above described method and the like. Based on the detected position coordinates, correction values for shift and rotation with respect to the scanning lines of stimulating rays are calculated. The calculation of these correction values may be conducted by the aforesaid method or by storing the correct position coordinates of the markers in a memory and comparing them with the position coordinates of the marker read out. Based on the correction values for the shift and the rotation thus calculated, the read-out stage 203 is shifted in the directions indicated by the arrows X and Y by use of servo motors 208 and 209, and/or the read-out stage 203 is rotated in the direction indicated by the arrow Q, thereby to locate the position coordinates of the markers stored in the stimulable phosphor sheet 201 in a position

predetermined with respect to the scanning lines of stimulating rays. After the stimulable phosphor sheet 201 is shifted and/or rotated as described above, it is moved again by the conveyer belt 204 and scanned with the stimulating rays 206 to read out the radiation image stored in the stimulable phosphor sheet 201. The read-out is conducted by photoelectrically detecting the light emitted from the stimulable phosphor sheet 201 during the scanning thereof with the stimulating rays 206 by use of the photodetector 207, A/D converting the image signal thus obtained, and sequentially storing the digitized image signals in a memory. After the read-out is finished, the stimulable phosphor sheet 201 is ejected from the read-out stage 203 by an ejection belt 211. Thereafter, the other radiation image to the subtraction processed is read out from the other stimulable phosphor sheet in the same manner as described above. In the two images corrected for deviations with respect to the scanning lines stimulating rays, deviations between the two images have been already corrected. Experiments conducted on this method showed that it takes about 30 seconds for the correction of deviations to be carried out. After the two radiation images to be subtraction processed are read out as described above, a subtraction processed image having high quality can be obtained simply by conducting the subtraction processing of the image signals of the radiation images to be subtraction processed between the corresponding addresses in the digital memory where the image signals are stored.

As the method of moving the stimulable phosphor sheet with respect to the scanning lines of stimulating rays so as to locate the position coordinates of the markers in a position predetermined with respect to the scanning lines of stimulating rays, it is also possible to move only the stimulable phosphor sheet by moving guide members 301, 302, 303 and 304 as shown in Figure 18, or to move the scanning lines of stimulating rays by the movement of a part 311 of the scanning optical system as shown in Figure 19.

In Figure 18, the guide members 301 and 303 are first moved to correct the shift in the conveying direction of phosphor sheet according to the calculated correction value for shift. Then, the guide members 302 and 304 are moved to correct the shift in the direction perpendicular the conveying direction of the phosphor sheet. Thereafter, the guide members 301 to 304 are moved in synchronization to correct the rotation. There is no limitation to the sequence of the movements of the guides 301 to 304, and both shift and rotation may be corrected at one time by the synchronous movements of the four guides. Each of the guide members 301 to 304 is driven by a servo motor or the like as shown in Figure 17, can be moved in the conveying direction of the phosphor sheet and the direction perpendicular to the conveying direction of the sheet, and is rotatable around the bar supporting them. Experiments conducted on this method revealed that it takes about 10 seconds for the correction of deviations to be conducted.

In Figure 19 showing another embodiment of the read-out apparatus employed in the present invention. In this embodiment, an optical scanning system 311 and a photodetector 312 are moved in synchronization according to the deviation correction value. Since the phosphor sheet conveying system need not be moved and there are no guide members nor guide drive system, the read-out apparatus has a relatively simple and compact construction. However, since the optical system such as reflection mirror must be accurately moved and control for moving the optical system must be conducted more strictly, the time required for the correction of deviations to be conducted was 30 seconds, the time which was approximately equal to the time required in the case shown in Figure 17.

Of course, the aforesaid periods required for the correction of deviations to be conducted include the time required for the mechanical system (the phosphor sheet conveying system shown in Figure 17, the guide members shown in Figure 18, or the optical scanning system and the photodetector shown in Figure 19) moved for the correction of deviation to be returned to the predetermined standard position after the readout of each stimulable phosphor sheet is finished. The read-out apparatuses described above are also provided with a mechanism for detecting the error in the movement of the mechanical system in the above correction of deviations caused by over-running of the mechanical system due to the intrinsic inertia thereof and further correcting the position of the mechanical system. The aforesaid periods required for the correction of deviations to be conducted also include the time required for the correction of the mechanical system by this mechanism.

While the embodiments of the present invention have been described above for the cases wherein the subtraction image is obtained from two radiation images, a subtraction image can similarly be obtained also from three or more radiation images in accordance with the present invention.

Also, in the above-described embodiments, both correction of the shift and correction of rotation are conducted mechanically. However, it is also possible to conduct only the correction of the rotation in the manner as described above, and conduct digitally the correction of the shift by use of the position coordinates of the markers detected when carrying out the subtraction between the two radiation images.

Further, in order to obtain a subtraction processsed image corrected for deviations in a short operation period, it is also possible to employ at least one marker having a shape defining at least one edge portion of the radiation image area, and reading out the image signal of the radiation image by using the detected signal of the edge portion of said radiation image area defined by said marker as the synchronizing signal.

Also by such a method, it is possible to very quickly conduct the correction of deviations.

This method will hereinbelow be described in further detail with reference to the accompanying drawings.

Figure 20 shows another embodiment of recording of a marker on a stimulable phosphor sheet. This embodiment is the same as the embodiment shown in Figure 5, except that a frame-like marker forming member 402 is employed and, as a result, a frame-like marker 402′ is stored in a stimulable phosphor sheet 405.

By using the marker having the shape defining the edge portions ofthe radiation image area, and reading out the image signal of the radiation image by using the detected signal of the edge portions of the radiation image area defined by the marker as the synchronizing signal, the deviations between the radiation images stored in the stimulable phosphor sheets are eliminated.

Accordingly, it is possible to obtain a subtraction image of high quality by conducting the subtraction processing between the digital image signal of the radiation images thus read out.

The radiation image stored in the stimulable phosphor sheet 405 as shown in Figure 20 is read out by use of the read-out apparatus shown in Figure 21.

The read-out apparatus shown in Figure 21 is substantially the same as the read-out apparatus shown in Figure 2, except that the synchronizing signal is detected in a signal processor 416. The read-out apparatus comprises a laser source 410, a light deflector 412, a light guiding sheet 414, a photodetector 415, a signal processor 416, and a digital operation unit 417 having a digital memory. The radiation image stored in the stimulable phosphor sheet 405 is read out in the form of light 413 emitted from the stimulable phosphor sheet 405 upon stimulation thereof by being scanned with a laser beam 411. The output of the photodetector 415 is sent to the digital operation unit 417 via the signal processor 416 comprising an amplifier, an A/D converter or the like.

As shown in Figure 22A, the output signal obtained from the photodetector 415 represents noise below a certain level (indicated by the broken line) as long as the portion where the marker exists is scanned with the laser beam 411 (i.e. during the periods indicated by M1 and M2 in Figure 22A), and represents a signal above said certain level corresponding to the radiation image when the portion where the radiation image exists is scanned with the laser beam 411 (i.e. during the period indicated by I in Figure 22A).

Accordingly, by detecting the edge portions of the radiation image area defined by the marker, for example, by detecting the aforesaid signal level, and using the detected signal thus obtained as the synchronizing signal, it is possible to obtain a radiation image corrected for deviations.

By way of example, a method of correcting the deviations of the radiation images by use of the aforesaid detected signal of the edge portion of the radiation image area will now be described below.

Figure 23 is a block diagram showing an embodiment of the signal processor 416 shown in Figure 21.

In the signal processor 416, the output signal obtained from the photodetector 415 is amplified by an amplifier 418. When a comparator detects that the amplified output signal rises above a predetermined signal level which is higher than the noise level generated by a threshold generating circuit 419, i.e. when the edge portion of the radiation image area is detected, the output signal is A/D converted by an A/D converter 420 until the output signal falls below the predetermined level, i.e. until another edge portion of the radiation image area is detected. The digital image signal of the picture elements scanned by one scanning line is obtained in this manner and once stored in a buffer memory 421. When the image signals of a predetermined number of picture elements are stored in the buffer memory 421, the image signals are transmitted to the digital operation unit 417. When the number of the picture element does not reach the predetermined number, the image signals of said picture elements stored in the buffer memory are cancelled. For example, in case the marker 402′ is stored in the stimulable phosphor sheet 405 in the condition rotated with respect to the stimulable phosphor sheet 405, the effective image scanning distance of the scanning line, i.e. the locus of the stimulating rays which scan the stimulable phosphor sheet 405) in parallel with the upper edge thereof becomes shorter at the upper portion and the lower portion of hhe region wherein the radiation image is recorded than other portion thereof. Accordingly, the number of the picture elements scanned when these upper and lower portions are scanned with the stimulating rays becomes smaller than a number of the picture elements predetermined corresponding to the width inside of the marker 402. In this case, therefore, all of the signals obtained from these upper and lower portions are cancelled. The image signals which have not been cancelled are stored in the memory as if they represented the image as shown in Figure 24B. When the image signals are processed as described above, even a radiation image involving shift and/or a rotation (as shown in Figure 24A) can be stored in the memory or the like as the radiation image wherein the shift and the rotation are eliminated (as shown in Figure 24B), and can then be reproduced as a visible image or subjected to various image processings and reproduced as a visible image. In Figure 24B, the image is distorted to an extent corresponding to the degree of rotation of the marker 402′ with respect to the stimulable phosphor sheet 405. However, it has been found that, when the rotation is 2° or less, the image distortion is not detrimental to viewing.

Figure 25 is a block diagram showing another embodiment of the signal processor 416.

In the signal processor 416, the outpt signal obtained from the amplifier 418 is sent to a control circuit 422, which converts the output signal into a rectangular waveform signal and differentiates the rectangular waveform signal as shown in Figure 22B. The output signal obtained during the period between the "+" peak and the "-" peak representing the edge portions of the radiation image area is A/D converted by the A/D converter 420. The digital image signals of the picture elements scanned by one scanning line is obtained in this manner and once stored in the buffer memory 421. Only when the image signals of a predetermined number of picture elements are stored in the buffer memory 421, the image signals are transmitted to the digital operation unit 417. In this manner, deviations of the radiation image are corrected.

It is also possible to employ one or two rectangular markers as shown in Figure 26A and 26B, detect the edge portion or portions of the radiation image area from the marker or markers, and use the thus obtained detected signal as the synchronizing signal.

When one rectangular marker is employed, the edge portion of the radiation image area can be detected by detecting the output signal having a level below the predetermined level for a predetermined period or by obtaining the differentiation signal as described above. When two rectangular markers are employed, the acanning can be stopped by detecting the second marker.

In case the image signals is once stored in the buffer memory, the image signals corrected for deviations can be read out from the buffer memory even when only the second marker (i.e. the marker scanned after the image area is scanned) is used.

Further, it is also possible to employ a marker comprising two or more lines having a predetermined width and positioned in parallel with one another at predetermined intervals, as shown in Figure 26C. In this case, when the marker is scanned with stimulating rays, the output signal obtained becomes higher than and lower than the aforesaid level at every intervals predetermined. Therefore, the marker can be detected certainly.

Storing the image signals in the buffer memory need not be started immediately after the marker is detected. It may be started after a predetermined period has elapsed after the marker is detected.

After one of the radiation images to be subtraction processed is read out as described above, read-out of the other radiation image is conducted in the same manner.

After the two radiation images to be subtraction processed are read out as described above, a subtraction processed image having high quality can be obtained simply by conducting the subtraction processing of the image signals of the radiation images to be subtraction processed between the corresponding addresses in the memory where the image signals are stored.

While the subtraction image is obtained from two radiation images in the above-described embodiments, a subtraction image can similarly be obtained also from three or more radiation images in accordance with the present invention.

As described above, the subtraction processed image obtained by utilizing the radiation image read-out and recording system using the stimulable phosphor sheets has a high diagnostic efficiency and accuracy. However, it has been found that the problem as described below is sometimes presented in the case of a subtraction processing of a blood vessel image. Namely, since this system has excellent spatial frequency response characteristics, even the subtracted image can be contained unnecessary high-frequency noise and reproduced on the output image. As a result, particularly, the background region (the constant density region developing in the image as a result of removal of an unnecessary pattern by the subtraction processing sometimes constitutes a visual obstacle to a viewer. Although such highfrequency noise does not greatly affect the diagnostic efficiency and accuracy, it gives a visually uncomfortable feeling to the viewer in the case of a certain kind of image (an image involving serious radiation quantum noise as a result of recording by a very low radiation dose, or the like). Specifically, in the radiation image read-out and recording system using the stimulable phosphor sheets, the picture element having a size of about 0.1 mm is generally selected in order to record even a structure containing the high-frequency component of about 5 cycles/mm, such as the bone. Accordingly, the spatial resolution of the radiation image obtained becomes 5 cycles/mm according to the sampling theorem, and it is possible to record a fine structure such as the bone. However, most of image information of the blood vessel image exists at a frequency lower than 2 cycles/mm. Therefore, in a subtraction processed image obtained by erasing the bone from an original image exhibiting the spatial frequency response of about 5 cycles/mm to extract the blood vessel image, the major portion of the frequency components of 2 to 5 cycles/mm constitutes highfrequency noise detrimental to viewing, particularly diagnosis. Typically, radiation quantum noise exists in the image as the highfrequency noise. In general, the radiation quantum noise increases when recording is effected at a low radiation dose. Even in the same image, the radiation quantum noise increases at a portion of substance having a low radiation transmittance, such as the bone. However, the radiation quantum noise does not present a visual problem in the original images before the subtraction processing is conducted. This is because, in the original images, there are large differences in the level of image density due to the existence of both low density portion such as the bone and high density portion such as the

skin, so that the influence of the radiation quantum noise cannot be visually recognized or is negligible. On the other hand, in a subtraction processed image, an unnecessary pattern is removed by subtraction processing and, as a result, an area of a region of constant density becomes wide. When the highfrequency noise such as the radiation quantum noise develops in such constant density portion, it gives visually intolerable roughness feeling (called deterioration of granularity) to the viewer. Further, the radiation quantum noise has the Poisson distribution, and the noise in the image after the subtraction processing becomes $\sqrt{2}$ times the noise before the subtraction processing. Therefore, in the subtraction processed image, the high-frequency noise becomes more conspicuous and the granularity visually becomes more deteriorated.

In order to remove the high-frequency -noise developing due to the aforesaid causes from the subtraction processed image, it is effective to conduct the image size reduction processing for the radiation image before or after the subtraction.

The term "image size reduction processing" as used herein means the processing for forming a new radiation image containing a reduced number of picture elements by reducing the number of picture elements of the radiation image prior to the image size reduction processing. In a preferred embodiment, the image size reduction processing is conducted by equally dividing the radiation image prior to the image size reduction processing to sections having an area larger than the area of each picture element of the radiation image, calculating the weighted mean of the image signal values of the picture elements of the radiation image by using the areas over which the respective sections thus obtained are superposed upon the respective picture elements of the original radiation image as the weight coefficients, and using the thus obtained image signal value as the image signals of the image size reduction processed radiation image.

According to this method, since the unnecessary high-frequency component is removed from the subtraction processed image, the highfrequency noise in the image is decreased. Further, by virtue of the visual effects of the image size reduction, the subtraction processed image becomes sharp. Particularly, the subtraction processed image of a blood vessel image becomes very suitable for diagnostic purposes.

Further, when the image size reduction processing is carried out as described above, the number of the picture elements in the subtraction image finally obtained becomes smaller than the number of the picture elements in the radiation image immediately after being read out from the stimulable phosphor sheet. Accordingly, in case the subtraction image is filed in a recording medium such as magnetic disk, magnetic drum, or the like, it is possible to save the memory capacity. Further, since the subtraction image is outputted in the size reduction form, it is possible to reproduce many subtraction images on one sheet. This is very advantageous from the viewpoint of economics.

Furthermore, when the image size reduction processing is carried out for the radiation images before the subtraction processing, the number of picture elements in the two radiation images to be subtraction processed is reduced. Accordingly, in case the correction of deviation in two radiation images is conducted digitally by the aforesaid method, it is possible to achieve the correction at high speeds.

The method of the image size reduction processing will now be described below in further detail.

As described above, the image size reduction processing means the processing for forming a new radiation image containing a reduced number of picture elements by reducing the number of picture elements of the radiation image prior to the image size reduction processing. It is also possible to conduct the image size reduction processing, for example, by alternately extracting the image signal values of the picture elements of the radiation image before the image size reduction processing, and using the extracted image signal values as the image signal values of the picture elements of the radiation image obtained after the image size reduction processing. It is possible to thereby remove the high-frequency component which develops noise. However, from the viewpoint of the image quality of the subtraction image ultimately obtained, the image size reduction processing should preferably be carried out by equally dividing the original radiation image prior to the image size reduction processing to sections having an area larger than the area of each picture element of the original radiation image, calculating the weighted mean of the image data of the picture elements of the radiation image by using the areas over which the respective sections thus obtained are superposed upon the respective picture elements of the original radiation image as the weight coefficients, and using the thus obtained image signal value as the image signals of the image size reduction processed radiation image. The preferred embodiment of the image size reduction processing will hereinbelow be described in further detail with reference to Figures 27A and 27B.

In Figure 27A, the solid lines indicate the arrangement of the picture elements of the radiation image prior to the image size reduction processing. These picture elements can be indicated as (i, j) by using indexes i and j (i and j are positive integers). The broken lines indicate the arrangement of the picture elements (hereinafter referred to as the sampling picture elements) obtained by equally dividing the original radiation image to sections having an area larger than the area of each picture element of the original radiation image

prior to the image size reduction in order to conduct the image size reduction processing. These sampling picture elements can be indicated as (l, m) by using indexes l and m (l and m are positive integers). Of course, the sampling picture elements correspond to the picture elements of the radiation image obtained after the image size reduction processing in one-to-one relation. If the area, over which the sampling picture element (l, m) is superposed upon the picture element (i, j) of the original radiation image is taken to be a l,m, i, j, the image signal value of the picture element (i, j) prior to the image size reduction processing is taken to be $S_{i,\,j}$, and the image signal value of the picture element (l, m) after the image size reduction processing is taken to be $S'_{l,m}$, the image signal value $S'_{l,m}$, can be expressed by the weighted mean

$$S'_{l,\,m}=\frac{\sum_i \sum_j a_{l,\,m,\,i,\,j}S_{i,\,j}}{\sum_i \sum_j a_{l,\,m,\,i,\,j}} \qquad (2)$$

In Figure 27B which is a partially enlarged view of Figure 27A, the Formula (2) is expressed by

$$S'_{l,\,m}=\frac{\sum_{i-1}^{i+1} \sum_{j-1}^{j} a_{l,\,m,\,i,\,j}S_{i,\,j}}{\sum_{i-1}^{i+1} \sum_{j-1}^{j} a_{l,\,m,\,i,\,j}}$$

Accordingly, the image size reduction processing can be achieved by obtaining the image signal values of all sampling picture elements by using Formula (2), and expressing the thus obtained image signal values as the picture elements having the same size as the picture elements of the original radiation image. As the image signal value, the amounts of light emitted from the stimulable phosphor sheet when exposed to stimulating rays at the image read-out step or the log-converted values of the amounts of the light should preferably be employed. While the image size reduction processing has been described above for the case wherein the picture elements are square, the image size reduction processing can be conducted in the same manner as described above also when the picture elements have other forms such as rectangular form.

When the picture elements are square and the image size reduction is conducted at an area ration of $1/N^2$, the spatial frequency becomes 1/N. However, most of image information of the blood vessel image exists at 2 cycles/mm or less. Therefore, it is of course necessary to select an appropriate image size reduction ratio so that the image information of the blood vessel image is not eliminated and the unnecessary high-frequency noise component is effectively removed.

Figure 28 is a graph showing an example of spatial frequency response for explanation of removal of high-frequency noise by the image size reduction processing.

In Figure 28, the broken line indicates the response of the blood vessel image before the image size reduction processing, and the solid line indicates the response of the blood vessel image after the image size reduction processing is conducted.

As described above, in the radiation image read-out and recording system using the stimulable phosphor sheets, the picture element having a size of about 0.1 mm is generally selected in order to record even a structure containing the high-frequency component of about 5 cycles/mm, such as the bone. Accordingly, the spatial frequency of the radiation image obtained becomes 5 cycles/mm. As indicated by the broken line in Figure 28, in the image information of the subtraction processed image existing in the range from 2.5 to 5 cycles/mm, almost all image information concerning the blood vessel image is unnecessary. It is difficult to effectively utilize the image information of the blood vessel image due to the high-frequency noise which became conspicuous due to the subtraction processing. When such a subtraction image exhibiting the spatial frequency response of 5 cycles/mm is subjected to the image size reduction processing by using an area ratio of 1/4, the high-frequency component within the range from 2.5 to 5 cycles/mm is removed, and the low-frequency component wherein the major portion of the image information of the blood vessel image exists remains, as indicated by the solid line in Figure 28. Accordingly, the necessary image information is not eliminated in the subtraction image, and the high-quality subtraction image free from the high-frequency noise is obtained. In general, when the high-frequency noise is removed, the image becomes somewhat unsharp. However, since the whole image is reduced in size, the image appears sharp visually.

The above descriptions can apply to every image size reduction ratio. However, from the viewpoint of the calculation processing, it is advantageous to conduct the image size reduction by using an area ratio of 1/(square of a rational number). From the viewpoint of the calculation processing, it is most advantageous to conduct the image size reduction processing at an

$$S'_{l,m} = \frac{4(Si, j) + 2(Si + 1, j) + (2Si, j + 1) + (Si + 1,j + 1)}{9},$$

$$S'_{l,m+1} = \frac{4Si,j + 2 + 2Si + 1,j + 2Si + 1,j + 2 + Si + 1,j + 1}{9}$$

$$S'_{l+1,m} = \frac{4Si + 2,j + 2Si + 1,j + 2Si + 2,j + 1 + Si + 1,j + 1}{9},$$

and

$$S'_{l+1,m+1} = \frac{4Si + 2,j + 2 + 2Si + 1,j + 2 + 2Si + 2,j + 1 + Si + 1,j + 1}{9}.$$

Thus, the image size reduction processing can always be conducted based on these four weighted mean formulas. Accordingly, when the image size reduction is carried out by using an area ratio of 1/(square of a rational number), Formula (2) can be expressed as very simple formulas. This is advantageous from the viewpoint of the calculation processing.

Next, for explanation of the image size reduction processing conducted by using an area ratio of 1/(square of an integer), an embodiment wherein the image size reduction processing is conducted by using an area ratio of $1/(2^2)$ will be described below with reference to Figures 30A and 30B.

Figure 30A shows the arrangement of the picture elements of the radiation image before the image size reduction processing, and Figure 30B image size reduction ratio of 1/(square of an integer) since, in this case, the manner in which the picture elements of the radiation image before the image size reduction processing are superposed upon the sampling picture elements is uniformly determined regardless of the position in the image.

For explanation of the image size reduction processing conducted by using an area ratio of 1/(square of a rational number), an embodiment wherein the image size reduction processing is carried out by using an area ratio of

$$1/(\frac{2^2}{3^2})$$

will hereinbelow be described with reference to Figures 29A and 29B.

Figure 29A shows the arrangement of the picture elements of the radiation image before the image size reduction processing, and Figure 29B shows the arrangement of the picture elements of the radiation image obtained after the image size reduction processing is conducted.

In this embodiment, Formula (2) is expressed as shows the arrangement of the picture elements of the radiation image obtained after the image size reduction processing is conducted.

In this embodiment, Formula (2) is expressed very simply as

$$S'_{lm} = \frac{\sum_{i}^{i+1} \sum_{j}^{j+1} Sij}{4}$$

Accordingly, when the image size reduction is carried out by use of an area ratio of 1/(square of an integer), the calculation processing speed becomes very high.

The above-described image size reduction processing may be carried out for the radiation image obtained after the subtraction is conducted between the radiation images to be subtraction processed, i.e. for the subtraction image, or may be carried out for the two radiation images before the subtraction is conducted.

Figure 31 is an explanatory view showing the step of conducting the image size reduction processing for a radiation image obtained after the subtraction is conducted between the radiation images to be subtraction processed i.e. for a subtraction image.

By the temporal (time difference) subtraction processing or the energy subtraction processing utilizing the radiation image read-out and recording system using a stimulable phosphor sheet, two radiation images A and B one of which contains an enhanced image of a desired structure (for example, a blood vessel image) are obtained. Specifically, in the case of the temporal (time difference) subtraction processing conducted in angiography, two radiation images one of which contains an enhanced blood vessel image are obtained by storing a radiation image of an object on one stimulable phosphor sheet before a contrast media is injected

into the blood vessel of the object, then storing a radiation image of the object on the other stimulable phosphor sheet after a contrast media is injected into the blood vessel of the object, scanning the respective stimulable phosphor sheets carrying radiation images different from each other stored therein with stimulating rays (laser beam), photoelectrically reading out the light emitted from the respective stimulable phosphor sheets upon stimulation thereof, and converting the obtained electric signals into digital image signals. In the case of the energy subtraction processing conducted in angiography, an object containing a contrast media injected into the blood vessel thereof is exposed to radiations having energy distribution different from each other, and the radiation images of the object obtained by the two exposing steps are stored in separate stimulable phosphor sheets. The radiation images thus stored are read out in the same manner as the read-out in the case of the temporal (time difference) subtraction.

The thus obtained digital image signals of the two radiation images A and B one of which contains an enhanced image of a desired structure of the object are subjected to a subtraction processing between the corresponding picture elements of the radiation images A and B. By the subtraction processing, to extract the desired structure (for example, the blood vessel image) a subtraction image A-B is obtained. In the case of the temporal (time difference) subtraction, the subtraction processing of the digital image signals is conducted by simple subtraction or subtraction after the image signals are multiplied by an equal weight coefficient. In the case of the energy subtraction, the subtraction processing of the digital image signals is conducted by subtraction after the image signals are multiplied by appropriate weight coefficients. The subtraction image A-B obtained as described above has a high diagnostic efficiency and accuracy, but still contains high-frequency noise. By conducting the aforesaid image size reduction processing for the subtraction image A-B, it is possible to obtain a sharp subtraction image a-b in which the high-frequency noise has been eliminated and which is very suitable for viewing, particularly diagnostic purposes. The subtraction image a-b thus obtained may be reproduced on a recording material such as photographic film or a display such as a CRT, or may be filed in a recording medium such as magnetic disk or magnetic drum. Since the number of the picture elements in the subtraction image a-b has been reduced, the image area required for the reproducing is decreased, and the memory area required for the filing is also decreased. This is advantageous from the viewpoint of economics. When the subtraction image is reproduced on a film by scanning it with light beam, the subtraction image can further be reduced in size by increasing the scanning rate of the light beam.

Figure 32 is an explanatory view showing the step of conducting the image size reduction processing for radiation images before the subtraction.

In the embodiment shown in Figure 32, since the image size reduction processing is conducted for two radiation images A and B prior to subtraction, it is necessary to carry out the image size reduction processing twice. However, when the image size reduction processing is applied to radiation images prior to subtraction, the number of picture elements in the two radiation images to be subtraction processed is reduced. Therefore, it is possible to digitally correct the deviations between two radiation images at high speed by the aforesaid method. The subtraction image a-b finally obtained by the embodiment shown in Figure 32 is sharp and suitable for viewing, particularly diagnostic purposes, and does not contain unnecessary high-frequency noise, like the subtraction image obtained by the step shown in Figure 31. The subtraction image a-b can be reproduced or filed in the same manner as described above.

If necessary, it is also possible to further remove the high-frequency noise by carrying out a smoothing processing for the radiation image before or after the image size reduction processing.

The radiation image obtained as described above has a high diagnostic efficiency and accuracy. However, it will sometimes happen that portions of the radiation images at which the radiation images do not overlap one upon the other are reproduced at the periphery of the reproduced subtraction image as unnecessary portions. In such a case, unnecessary image portions develop at the periphery of the subtraction image, sometimes making it difficult to view the subtraction image and adversely affecting the quality of the subtraction image.

Accordingly, it is further desirable to obtain a subtraction image by forming an image frame of desired density so as to cover the unnecessary portions occurring at the periphery of the subtraction image.

Figure 33 is an explanatory view showing the step of creating an image frame at the unnecessary portions occurring at the periphery of the subtraction image. In Figure 33, a reference character 503A designates the image obtained from the first stimulable phosphor sheet A carrying an X-ray image substantially same as that of ordinary X-ray photograph stored therein, in which the bone at the abdomen and the blood vessel and the liver enhanced by the injection of a contrast media can be seen. A reference character 503B designates an image obtained from the second stimulable phosphor sheet B carrying a radiation image of the same portion as the image 503A recorded before the injection of a contrast medium, in which only the bone can be seen. A reference character 503C denotes a subtraction processed image obtained by correcting the deviations between the images 503A and 503B when the digital image signal reperesenting the image 503B is subtracted from the digital image signal representing the image 503A, so that only the blood vessel and the liver can be

seen. The image 503C involves unnecessary portions 506 and 506′ developing at the periphery of the image 503C because the images 503A and 503B do not overlap one upon the other at these portions 506 and 506′. A reference character 503D denotes a subtraction image in which the unnecessary portions 506 and 506′ are erased by recording an image frame 507 having a grey level (i.e. the shade of digitally converted image) coinciding with the average grey level of the subtraction image at the unnecessary portions 506 and 506′ developing at the image periphery.

The term "grey level" as used herein means the shade of the image after digital conversion (including the logarithmic compression), which is a value mainly handled in the image processing computer.

In Figure 33, when deviations between the images 503A and 503B are corrected, they are superposed one upon the other so that markers 508A and 508B on the image 503A are superposed respectively upon markers 508A′ and 508B′ on the image 503B. Namely, the spatial coordinates of the reference points provided by the markers 508A and 508B on the image 503A and the markers 508A′ and 508B′ on the image 503B are detected, and the amounts of rotation and shift of the images 503A and 503B with respect to each other which are necessary to match the corresponding reference points to each other are calculated. Then, deviations between the images 503A and 503B are corrected based on the calculated rotation and shift amounts, and subtraction of the image data is conducted between the corresponding picture elements.

Although the markers 508A, 508B, 508A′ and 508B′ are also subtraction processed, it sometimes happens that peripheral portions of the markers are left and reproduced as marker images 508A " and 508B" on the image 503C within the size of the picture element. Since these marker images 508A″ and 508B″ may also adversely affect the diagnostic efficiency and accuracy, they are erased by detecting their positions and recording spots 509A and 509B having a greyness degree identical with the average grey level of the subtraction image. The image frame 507 and the spots 509A and 509B are created on the digital image signals before the digital image signals are D/A converted in the image recording apparatus.

As described above, the grey level of the image frame 507 and the spots 509A and 509B is selected to coincide with the average grey level of the subtraction image. The average grey can be measured as described below.

Basically, the average grey level should preferably be determined by averaging the signal values over the whole image area of a subtraction image after once forming the subtraction image. Actually, however, there are limits to the processing time and the capacity of the image storing memory. It is difficult to determine the average grey level quickly and simply, particularly in the radiation image read-out and recording system using the stimulable phosphor sheets wherein a sharp image having excellent spatial resolution is reproduced by using very small size picture elements (5 to 10 picture elements/mm). As the method of determining the average grey level of an image in a short processing period, the following may be employed:

1) After the subtraction processing is conducted for one buffer memory, the subtraction image in the buffer memory is used to determine the average grey level, and the image frame 507 and the spots 509A and 509B are made in the buffer memory.

2) Each time the subtraction operation is conducted for one scanning line, the average grey level is determined for one scanning line, and the image frame 507 and the spots 509A and 509B are made for every scanning line.

3) Before the subtraction operation is conducted, the average image signal value of each images is determined and stored by use of each of the two images 503A and 503B. When it is necessary to create the subtraction image, the average grey level of the subtraction image is immediately determined simply by once subtracting between the average grey level of the two images determined as described above.

The method of measuring the thickness of the image frame 507 in the embodiment shown in Figure 33 will now be described below with reference to Figure 34. In Figure 34, if the deviation correction amounts between two images to be subtraction processed are expressed by a rotation angle of $\Delta\theta$ (degree) and shift amounts of $\Delta X$ (mm) and $\Delta Y$ (mm), the minimum necessary frame thicknesses Fx (mm) and Fy (mm) in the X and Y directions are expressed by the formulas of

$$Fx = \left(\frac{Q}{2} + |\Delta Y|\right) \cdot \sin|\Delta\theta| + |\Delta X| \cdot \cos|\Delta\theta| + \frac{P}{2} \cdot (\cos|\Delta\theta| - 1)(mm) \quad (3)$$

$$Fy = \left(\frac{P}{2} + |\Delta X|\right) \cdot \sin|\Delta\theta| + |\Delta Y| \cdot \cos|\Delta\theta| + \frac{Q}{2} \cdot (\cos|\Delta\theta| - 1)(mm) \quad (4)$$

On the basis of Formulas (3) and (4), the necessary image frame thicknesses are determined for each image, and the image frame is created.

In the embodiment described above, the image frame is created digitally before the digital image signals are D/A converted in the image recording apparatus, the density of the image frame is selected to coincide the average grey level of the subtraction image, and the size of the image frame is determined by use of Formulas (3) and (4) according to the deviation correction amounts between two images to be subtraction processed.

However, the embodiment may be modified in various manners.

For example, it is also possible to record an image frame having a predetermined size and a predetermined density on a recording medium (for example, a light-sensitive material) when the subtraction image is recorded by use of the image recording apparatus. Further, to set the density value of the image frame, the grey level may be quantized normally to 8-bit to 10-bit digital levels, and the density value of the image frame may be set to the maximum or the minimum (255 or 0 in the case of 8 bits) of the digital levels. As described above, the grey level of the image frame should preferably be made to coincide with the average grey level of the subtraction image. When the grey level of the image frame is made nearly equal to the grey level of the subtraction image, the degree of enhancement of the image frame edge becomes low when the subtraction image is subjected to a unsharp masking processing, and a subtraction image which is suitable for viewing is obtained.

## Claims

1. A subtraction processing method for radiation images according to which at least one stimulable phosphor sheet (A, B) is exposed to a radiation (2) transmitting through an object (1), so as to form a radiation image of said object on said phosphor sheet (A, B), scanning said stimulable phosphor sheet with stimulating rays ( 11 ) to convert said radiation image into light (13) emitted from said stimulable phosphor sheet (A, B) upon stimulation thereof, photoelectrically reading out (15) the amounts of said emitted light and converting (15) them into image signals, characterised in that two or more stimulable phosphor sheets (A, B) are exposed to the radiation transmitting through the object (1) under conditions different from one another to have at least two radiation images (4A, 4B) of said object (1), wherein at least a part of image information is different among said radiation images (4A, 4B) recorded on said stimulable phosphor sheets, (A, B), converting (15, 16) the amounts of light emitted from at least two stimulable phosphor sheets (A, B) into digital image signals, and conducting subtraction (17) of said digital image signals between the corresponding picture elements of said radiation images to obtain a signal for forming an image of a specific structure contained in at least one of said radiation images. said method further comprising the steps of:
   i) when each radiation image to be subtraction processed is recorded on each stimulable phosphor sheet (105), simultaneously recording a marker (102A, 102B) having such a shape as to provide a reference point (102A′, 102B′) or a reference line to said stimulable phosphor sheet (105) in a position fixed with respect to said radiation image (103′),
   ii) scanning said stimulable phosphor sheet (105) carrying said radiation image (103′) stored therein with stimulating rays, and detecting the spacial coordinate of said reference point (102A′, 102B′) or said reference line provided by said marker (102A, 102B) from the digital image signal of said image detected from the light emitted from said stimulable phosphor sheet (105),
   iii) conducting the steps i) and ii) for said two or more radiation images to be subtraction processed,
   iv) calculating a rotation and a shift among said two or more radiation images based on the respective reference points (102A′, 102B′) or reference lines corresponding to said two or more radiation images (103′) to be subtraction processed,
   v) when said rotation exists, rotating digitally either one of said radiation images to be subtraction processed, and/or
   when said shift exists, moving digitally either one of said radiation images to be subtraction processed, and
   conducting a subtraction processing of the image signal value among the corresponding picture elements of said two or more radiation images to be subtraction processed.

2. A method as defined in Claim 1 wherein said photoelectric read-out is conducted by scanning said stimulable phosphor sheets (A, B) with the same stimulating rays after the recording on all of said stimulable phosphor sheets is finished.

3. A method as defined in Claim 1 or 2 wherein said conversion (16) of the read out amounts of said emitted light (13) into the digital image signals is conducted by converting the logarithmic values of the amounts of said emitted light into digital values.

4. A method as defined in claim 1 wherein a radiation image of said specific structure is reproduced by using said signal.

5. A method as defined in Claim 4 wherein said reproducing is conducted by optically recording a visible image on a light-sensitive material.

6. A method as defined in Claim 4 wherein said reproducing is conducted by displaying a visible image on a display.

7. A method as defined in any of Claims 4 to 6 wherein said reproducing is conducted by one electrically recording said signal for forming an image of a specific structure on a recording medium, and then reproducing said recorded signal.

8. A method as defined in Claim 7 wherein, when four picture elements approaching a picture element point A by coordinate rotation are taken to be a, b, c and d on the coordinate system before the rotation operation on said radiation image to tbe rotated, and when the image signal values of said four picture elements a, b, c and d are Sa, Sb, Sc and Sd, respectively, said rotation operation is conducted by expressing the image signal value $S_A$ of said picture element point A after the rotation by a weighted mean represented by the formula of

$$S_A = (Wa \cdot Sa + Wb \cdot Sb + Wc \cdot Sc + Wd \cdot Sd)Wtot$$

wherein

Wtot=Wa+Wb+Wc+Wd, and Wa, Wb, Wc and Wd respectively are the weight coefficients corresponding to picture elements a, b, c and d, or said rotation is conducted by cumulating the proportional distribution values of the image signal value $S_A$ of said picture element point A by said weight coefficients represented by the formulae of

$$Sa = (Wa/Wtot) \cdot S_A$$
$$Sb = (Wb/Wtot) \cdot S_A$$
$$Sc = (Wc/Wtot) \cdot S_A$$
$$Sd = (Wd/Wtot) \cdot S_A$$

for the image signal values Sa, Sb, Sc and Sd of the four picture elements a, b, c and d which are the points on the coordinate system before the rotation operation and which approach said picture element point A by the rotation operation of the coordinate including said picture element point A.

9. A method as defined in Claim 8 wherein said weight coefficients Wa, Wb, Wc and Wd are areas calculated by making the approximation that the rotation angle is zero in the course of calculating the areas over which said picture element A is superposed upon said four picture elements.

10. A subtraction processing method for radiation images according to which at least one stimulable phosphor sheet (A, B) is exposed to a radiation (2) transmitting through an object (1), so as to form a radiation image of said object on said phosphor sheet (A, B), scanning said stimulable phosphor sheet with stimulating rays (11) to convert said radiation image into light (13) emitted from said stimulable phosphor sheet (A, B) upon stimulation thereof, photoelectrically reading out (15) the amounts of said emitted light and converting (15) them into image signals, characterised in that two or more stimulable phosphor sheets (A, B) are exposed to the radiation transmitting through the object (1) under conditions different from one another to have at least two radiation images (4A, 4B) of said object (1), wherein at least a part of image information is different among said radiation images (4A, 4B) recorded on said stimulable phosphor sheets, (A, B), converting (15, 16) the amounts of light emitted from at least two stimulable phosphor sheets (A, B) into digital image signals, and conducting subtraction (17) of said digital image signals between the corresponding picture elements of said radiation images to obtain a signal for forming an image of a specific structure contained in at least one of said radiation images said method further comprising the steps of:

i) when each radiation image to be subtraction processed is recorded on each stimulable phosphor sheet (201), simultaneously recording a marker (102A, 102B) having such a shape as to provide a reference point (102A′, 102B′) or a reference line to said stimulable phosphor sheet (201) in a position fixed with respect to said radiation image (103′),

ii) scanning said stimulable phosphor sheet (201) carrying said radiation image (103′) stored therein with stimulating rays (206), and detecting the position coordinates of said reference point or said reference line of said marker detected from the light emitted from said stimulable phosphor sheet (201),

iii) moving said stimulable phosphor sheet (201), with respect to scanning lines of stimulating rays (206) based on said detected position coordinates and adjusting said position coordinate to a position coordinate predetermined with respect to said scanning lines of stimulating rays, and

iv) reading out said radiation image.

11. A method as defined in Claim 10 wherein, when each radiation image to be subtraction processed is recorded on each stimulable phosphor sheet (405), simultaneously recording a marker (402), having a shape defining at least one edge portion of the radiation image area in a position fixed with respect to said radiation image, and reading out image signals of said radiation image by using the detection signal of said edge portion defined by said marker as the synchronizing signal.

12. A method as defined in any of Claims 1 to 7, 10 and 11 wherein an image size reduction processing is conducted on the radiation image after or before said subtraction processing is conducted.

13. A method as defined in Claim 12 wherein said image size reduction processing is conducted by equally dividing the radiation image before the image size reduction pressing to sections (I, m) having an area larger than the area of each picture element (i, j) of the original radiation image, calculating the weighted mean of the image data of the picture elements of the radiation image by using the areas over which the respective sections thus obtained are superposed upon the respective picture elements of the original radiation image as the weight coefficients, and using the thus obtained image signal value as the image signals of the picture elements of the scale-down processed radiation image.

14. A method as defined in any of claims 1 to 7, 10, 11 and 12 wherein, at an unnecessary portion developing at the peripheral portion of the subtraction image obtained from two or more radiation images due to incomplete coincidence of the two or more radiation images, an image frame of arbitrary density is created so as to cover said unnecessary portion.

## Patentansprüche

1. Ein Subtrahierungsverfahren für Strahlungsbilder, bei dem wenigstens eine anregbare Phosphorplatte (A, B) einer durch einen Gegenstand (1) hindurchgehenden Strahlung (2) ausgesetzt wird, so daß ein Strahlungsbild des Gegenstandes auf der Phosphorplatte (A, B) gebildet wird, die anregbare Phosphorplatte mit Anregungsstrahlen (11) abgetastet wird, um das Strahlungsbild beim Anregen in von der anregbaren Phosphorplatte (A, B) ausgesandtes Licht (13) umzuwandeln, die ausgesandte Lichtmenge photoelektrisch ausgelesen (15) und in Bildsignale umgewandelt (15) wird,
dadurch **gekennzeichnet**,
daß zwei oder mehr anregbare Phosphorplatten (A, B) der durch den Gegenstand (1) hindurchgehenden Strahlung bei voneinander unterschiedlichen Bedingungen ausgesetzt werden, um wenigstens zwei Strahlungsbilder (4A, 4B) des Gegenstandes (1) zu erhalten, bei denen wenigstens ein Teil der Bildinformation bei den Strahlungsbildern (4A, 4B) unterschiedlich ist, die auf die anregbaren Phosphortafeln (A, B) aufgezeichnet worden sind, die von den wenigstens zwei anregbaren Phosphortafeln (A, B) ausgesandten Lichtmengen in digitale Bildsignale umgewandelt (15, 16) werden, eine Subtraktion (17) der digitalen Bildsignale zwischen entsprechenden Bildelementen der Strahlungsbilder durchgeführt wird, um ein Signal zum Bilden eines Bildes mit einer spezifischen Struktur zu erhalten, die in wenigstens einem der Strahlungsbilder enthalten ist, wobei das Verfahren ferner die Schritteumfaßt:
i) wenn jedes Strahlungsbild, das einer Subtraktionsverarbeitung unterworfen werden soll, auf jeder anregbaren Phosportafel (105) aufgezeichnet wird, gleichzeitig eine Markierung (102A, 102B) aufgezeichnet wird, die eine einen Bezugspunkt (102A′, 102B′) oder eine Bezugslinie liefernde Form für die anregbare Phosportafel (105) in einer bezüglich des Strahlungsbildes (103′) festen Lage schafft,
ii) Abtasten der anregbaren Phosphortafel (105), die das in ihr gespeicherte Strahlungsbild (103′) trägt, mit Anregengsstrahlen, und Erfassen der Raumkoordinate des Bezugspunktes (102A′, 102B′) oder der Bezugslinie, die von der Markierung (102A, 102B) geliefert werden, aus dem ditigalen Bildsignal des Bildes, welches von dem von der anregbaren Phosphortafel (105) ausgesandten Lichtes erfaßt wird,
iii) Durchführen der Schritte i) und ii) für die zwei oder mehreren Strahlungsbilder, die subtraktionsverarbeitet werden sollen,
iv) Berechnen einer Drehung oder einer Verschiebung bei den zwei oder mehreren Strahlungsbildern aufgrund der jeweiligen Bezugspunkte (102A′, 102B′) oder Bezugslinien, die den Zwei- oder mehreren Strahlungsbildern (103′) entsprechen, die subtraktionsverarbeitet werden sollen,
v) wenn eine Drehung vorliegt, digitales Drehen von irgendeinem der Strahlungsbilder, die subtraktionsverarbeitet werden sollen, und/oder wenn die Verschiebung vorliegt, digitales Bewegen von irgendeinem der Strahlungsbilder, die subtraktionsverarbeitet werden sollen, und

Durchführen einer Subtraktionsverarbeitung des Bildsignalwertes bei den entsprechenden Bildelementen der zwei oder mehreren Strahlungsbilder, die subtraktionsverarbeitet werden sollen.

**2.** Verfahren nach Anspruch 1, bei dem das fotoelektrische Auslesen durch Abtasten der anregbaren Phosphortafeln (A, B) mit den gleichen Anregungsstrahlen durchgeführt wird, nachdem das Aufzeichnen auf allen anregbaren Phosphortafeln abgeschlossen ist.

**3.** Verfahren nach Anspruch 1 oder 2,
bei dem die Umwandlung (16) der ausgelesenen Mengen des ausgesandten Lichts (13) in digitale Bildsignale dadurch durchgeführt wird, daß die logarithmischen Werte der Mengen des ausgesandten Lichtes in Digitalwerte umgewandelt werden.

**4.** Verfahren nach Anspruch 1, bei dem ein Strahlungsbild der spezifischen Struktur durch Verwenden des genannten Signals wiedergegeben wird.

**5.** Verfahren nach Anspruch 4, bei dem die Wiedergabe durchgeführt wird, indem ein sichtbares Bild optisch auf einem lichtemfpindlichen Material aufgezeichnet wird.

**6.** Verfahren nach Anspruch 4, bei dem die Wiedergabe durchgeführt wird, indem ein sichtbares Bild auf einer Anzeige angezeigt wird.

**7.** Verfahren nach einem der Ansprüche 4 bis 6, bei dem die Wiedergabe durchgeführt wird, indem das Signal elektrisch aufgezeichnet wird, um ein Bild einer spezifischen Struktur auf einem Aufzeichnungsmedium zu bilden, und bei dem daraufhin das aufgezeichnete Signal wiedergegeben wird.

**8.** Ein Verfahren nach Anspruch 7, bei dem wenn vier Bildelemente, die sich einem Bildelementpunkt A durch Koordinatendrehung nähern, in dem Koordinatensystem vor der Drehoperation bei dem zu drehenden Strahlungsbild a, b, c und d sind und wenn die Bildsignalwerte der vier Bildelemente a, b, c und d Sa, Sb, Sc bzw. Sd sind, die Drehoperation durchgeführt" wird, indem der Bildsignalwert $S_A$ des Bildelementpunktes A nach der Drehung durch ein gewichtetes Mittel durch die Formel angegeben wird:

$$S_A = (Wa \times Sa + Wb \times Sb + Wc \times Sc + Wd \times Sd)/Wtot$$

mit Wtot = Wa + Wb + Wc + Wd und Wa, Wb, Wc bzw. Wd

Gewichtskoeffizienten, die den Bildelementen a, b, c und d entsprechen, oder die Drehung durchgeführt wird, indem die proportionalen Verteilungswerte des Bildsignalwertes $S_A$ durch Gewichtskoeffizienten kumuliert werden, die durch die Formeln

$$Sa = (Wa/Wtot) \times S_A$$
$$Sb = (Wb/Wtot) \times S_A$$
$$Sc = (Wc/Wtot) \times S_A$$
$$Sd = (Wd/Wtot) \times S_A$$

für die Bildsignalwerte Sa, Sb, Sc und Sd der vier Bildelemente a, b, c und d dargestellt sind, die die Punkte in dem Koordinatensystem vor der Drehoperation sind und sich Bildpunkte A durch die Drehoperation der Koordinate nähern, die den Bildelementpunkt A enthält.

**9.** Verfahren nach Anspruch 8, bei dem die Gewichtskoeffizienten Wa, Wb, Wc und Wd Flächen sind, die dadurch berechnet werden, daß die Annäherung gemacht wird, daß der Drehwinkel beim Berechnen der Flächen 0 ist, denen das Bildelement A auf den vier Bildelementen überlagert ist.

**10.** Subtrahierungsverfahren für Strahlungsbilder, bei dem wenigstens eine anregbare Phosphorplatte (A, B) einer durch einen Gegenstand (1) hindurchgehenden Strahlung (2) ausgesetzt wird, so daß ein Strahlungsbild des Gegenstandes auf der Phosphorplatte (A, B) gebildet wird, die anregbare Phosphorplatte mit Anregungsstrahlen (11) abgetastet wird, um das Strahlungsbild beim Anregen in von der anregbaren Phosphorplatte (A, B) ausgesandtes Licht (13) umzuwandeln, die ausgesandte Lichtmenge fotoelektrisch ausgelesen (15) und in Bildsignale umgewandelt (15) wird,
dadurch **gekennzeichnet,**
daß zwei oder mehrere anregbare Phosphorplatten (A, B) der durch den Gegenstand (1) hindurchgehenden Strahlung bei voneinander unterschiedlichen Bedingungen ausgesetzt werden, um wenigstens zwei

Strahlungsbilder (4A, 4B) des Gegenstandes (1) zu erhalten, bei denen wenigstens ein Teil der Bildinformation bei den Strahlungsbildern (4A, 4B) unterschiedlich ist, die auf die anregbaren Phosphortafeln (A, B) aufgezeichnet worden sind, die von den wenigstens zwei anregbaren Phosphortafeln (A, B) ausgesandten Lichtmengen in digitale Bildsignale umgewandelt (15, 16) werden, eine Subtraktion (17) der digitalen Bildsignale zwischen entsprechenden Bildelementen der Strahlungsbilder durchgeführt wird, um ein Signal zum Bilden eines Bildes mit einer spezifischen Struktur zu erhalten, die in wenigstens einem der Strahlungsbilder enthalten ist, wobei das Verfahren ferner die Verfahrensschritte umfaßt:

i) bei Aufzeichnen eines jeden subtraktionszuverarbeitenden Strahlungsbildes auf jeder anregbaren Phosphortafel (201) gleichzeitiges Aufzeichnen einer Markierung (102A, 102B) einer solchen Form, daß ein Bezugspunkt (102A′, 102B′) oder eine Bezugslinie für die anregbare Phosphortafel (201) in einer festen Lage in bezug auf das Strahlungsbild (103′) geschaffen wird,

ii) Abtasten der das gespeicherte Strahlungsbild (103′) enthaltenden, anregbaren Phosphortafel (201) mit Anregungsstrahlen (206) und Erfassen der Ladekoordinaten des Bezugspunktes oder der Bezugslinie der Markierung, die mit dem von der anregbaren Phosphortafel (201) ausgesandten Licht erfaßt werden,

iii) Bewegen der anregbaren Phosphortafel (201) bezüglich Abtastlinien der Anregungsstrahlen (206) aufgrund der erfaßten Lagekoordinaten und Justieren der Lagekoordinate auf eine in bezug auf die Abtastlinien der Anregungsstrahlen vorbestimmte Lagekoordinate und

iv) Auslesen des Strahlungsbildes.

**11.** Ein Verfahren nach Anspruch 10, bei dem, wenn jedes subtraktionszuverarbeitende Strahlungsbild auf jeder anregbaren Phosphortafel (405) aufgezeichnet wird, gleichzeitig eine Markierung (402) mit einer Form aufgezeichnet wird, die wenigstens einen Randbereich der Strahlungsbildfläche in einer bezüglich des Strahlungsbildes festen Lage bestimmt, und die Bildsignale des Strahlungsbildes ausgelesen werden, indem das Erfassungssignal des durch die Markierung bestimmten Randbereiches als Synchronisierungssignal verwendet wird.

**12.** Verfahren nach wenigstens einem der Ansprüche 1 bis 7, 10 und 11, bei dem bei dem Strahlungsbild eine Bildgröße-Verkleinerungsverarbeitung durchgeführt wird, nachdem oder bevor die Subtraktionsverarbeitung durchgeführt wird.

**13.** Ein Verfahren nach Anspruch 12, bei dem die Bildgröße-Verkleinerungsverarbeitung durchgeführt" wird, indem das Strahlungsbild vor der Bildgröße-Verkleinerungsverarbeitung in Abschnitte (l, m) gleich unterteilt wird, die eine größere Fläche als die Fläche eines jeden Bildelementes (i, j) des ursprünglichen Strahlungsbildes aufweisen, das gewichtete Mittel der Bilddaten der Bildelemente des Strahlungsbildes berechnet wird, indem als Gewichtskoeffizienten die Flächen verwendet werden, denen die derart erhaltenen entsprechenden Abschnitte auf den entsprechenden Bildelementen des ursprünglichen Strahlungsbildes überlagert sind, und der derart erhaltene Bildsignalwert als die Bildsignale der Bildelemente des bezüglich der Verkleinerung verarbeiteten Strahlungsbildes verwendet wird.

**14.** Ein Verfahren nach wenigstens einem der Ansprüche 1 bis 7, 8, 10, 11 und 12, bei dem in einem nicht notwendigen Bereich, der sich im Umfangsbereich des von zwei oder mehreren Strahlungsbildern erhaltenen Subtraktionsbildes aufgrund einer unvollständigen Übereinstimmung der zwei oder mehreren Strahlungsbilder entwickelt, ein Bildrahmen mit beliebiger Dichte erzeugt wird, damit der nicht notwendige Bereich überdeckt wird.

## Revendications

1.- Procédé de traitement soustractif pour des images de rayonnement, suivant lequel au moins une feuille de luminophore stimulable (A,B) est exposée à un rayonnement (2) transmis à travers un objet (1), de manière à former une image de rayonnement de cet objet sur ladite feuille de luminophore (A,B), cette feuille de luminophore stimulable est balayée par des rayons de stimulation (11) pour transformer ladite image de rayonnement en une lumière (13) émise par ladite feuille de luminophore stimulable (A,B) lors de sa stimulation, les quantités de ladite lumière émise sont lues photoélectriquement (15) et elles sont transformées (15) en signaux d'image, caractérisé en ce que deux feuilles de luminophore stimulable (A,B) ou plus sont exposées au rayonnement transmis à travers l'objet (1) dans des conditions différentes l'une de l'autre de manière à obtenir au moins deux images de rayonnement (4A,4B) dudit objet (1), de sorte qu'au moins une partie de

l'information d'image est différente parmi les images de rayonnement (4A,4B) enregistrées sur lesdites feuilles de luminophore stimulable (A,B), les quantités de lumière émise par au moins deux feuilles de luminophore stimulable (A,B) sont transformées (15,16) en signaux d'image numériques, et on effectue la soustraction (17) de ces signaux d'image numériques entre les éléments d'image correspondants desdites images de rayonnement pour obtenir un signal de formation d'une image d'une structure spécifique contenue dans au moins une des dites images de rayonnement, ledit procédé comprenant en outre les opérations suivantes :

(i) lorsque chaque image de rayonnement à traiter par soustraction est enregistrée sur chaque feuille de luminophore stimulable (105), on enregistre simultanément un repère (102A,102B) ayant une configuration telle qu'il fournit un point de référence (102A',102B') ou une ligne de référence à ladite feuille de luminophore stimulable (105) dans une position fixe par rapport à ladite image de rayonnement (103'),

(ii) on balaie ladite feuille de luminophore stimulable (105), portant ladite image de rayonnement (103') qui y est emmagasinée, par des rayons de stimulation et on détecte les coordonnées spatiales dudit point de référence (102A',102B') ou de ladite ligne de référence fournis par ledit repère (102A,102B) à partir du signal d'image numérique de ladite image détectée à partir de la lumière émise par ladite feuille de luminophore stimulable (105),

(iii) on procède aux opérations (i) et (ii)pour les deux images de rayonnement ou plus, à traiter par soustraction,

(iv) on calcule une rotation et un décalage parmi les dites deux images de rayonnement ou plus, sur la base des points de référence respectifs (102A', 102B') ou des lignes de référence correspondant à ces deux images de rayonnement (103') ou plus à traiter par soustraction,

(v) lorsque ladite rotation existe, on fait tourner numériquement l'une ou l'autre desdites images de rayonnement à traiter par soustraction, et/ou

lorsque ledit décalage existe, on déplace numériquement l'une ou l'autre desdites images de rayonnement à traiter par soustraction, et on effectue un traitement soustractif de la valeur de signal d'image entre les éléments d'image correspondants desdites deux images de rayonnement ou plus à traiter par soustraction.

2.- Procédé suivant la revendication 1, dans lequel ladite lecture photoélectrique est effectuée par balayage desdites feuilles de luminophore stimulable (A, B) avec les mêmes rayons de stimulation, après achèvement de l'enregistrement sur toutes les feuilles de luminophore stimulable.

3.- Procédé suivant la revendication 1 ou 2, dans laquel ladite conversion (16) des quantités lues de ladite lumière émise (13) en signaux d'image numériques est effectuée par transformation des valeurs logarithmique des quantités dedite lumière émise en valeurs numériques.

4.- Procédé suivant la revendication 1, dans lequel une image de rayonnement de ladite structure spécifique est reproduite par utilisation dudit signal.

5.- Procédé suivant la revendication 4, dans lequel ladite reproduction est effectuée par enregistrement optique d'une image visible sur une matière sensible à la lumière.

6.- Procédé suivant la revendication 4, dans lequel ladite reproduction est effectuée par affichage d'une image visible sur un dispositif de visualisation.

7.- Procédé suivant l'une quelconque des revendications 4 à 6, dans lequel ladite reproduction est effectuée par enregistrement électrique dudit signal pour former une image d'une structure spécifique sur un support d'enregistrement, puis reproduction de ce signal enregistré.

8.- Procédé suivant la revendication 7, dans lequel, lorsque quatre éléments d'image approchant un point A d'élément d'image par rotation de coordonnées sont désignés par a,b,c et d dans le système de coordonnées avant l'opération de rotation de ladite image de rayonnement à faire tourner, et lorsque les valeurs de signal d'image de ces quatre éléments d'image a, b, c et d sont Sa,Sb,Sc et Sd, respectivement, ladite opération de rotation est effectuée par expression de la valeur de signal d'image $S_A$ dudit point A d'élément d'image après la rotation par une valeur moyenne pondérée représentée par la formule

$$SA = (Wa.Sa + Wb.Sb + Wc.Sc + Wd.Sd)/Wtot$$

dans laquelle Wtot = Wa + Wb + Wc + Wd et Wa, Wb, Wc et Wd sont respectivement les coefficients de pondération correspondant aux éléments d'image a,b,c et d, ou bien la dite rotation est effectuée par cumul des valeurs de distribution proportionnelle de la valeur de signal d'image $S_A$ dudit point A d'élément d'image par lesdits coefficients de pondération représentés par les formules :

$$Sa = (Wa/Wtot) . S_A$$
$$Sb = (Wb/Wtot) . S_A$$
$$Sc = (Wc/Wtot) . S_A$$
$$Sd = (Wd/Wtot) . S_A$$

pour les valeurs de signal d'image Sa,Sb,Sc et Sd des quatre éléments d'image a,b,c et d qui sont les points sur le système de coordonnées avant l'opération de rotation et qui s'approchent dudit point A élément d'image

par l'opération de rotation des coordonnées comprenant ce point A d'élément d'image.

9.- Procédé suivant la revendication 8, dans lequel lesdits coefficients de pondération Wa,Wb,Wc et Wd sont des surfaces calculées en faisant l'approximation que l'angle de rotation est nulle dans le cours du calcul des surfaces sur lesquelles ledit élément d'image A est superposé auxdits quatre éléments d'image.

10.- Procédé de traitement soustractif pour des images de rayonnement, suivant lequel au moins une feuille de luminophore stimulable (A,B) est exposée à un rayonnement (2) transmis à travers un objet (1), de manière à former une image de rayonnement dudit objet sur ladite feuille de luminophore (A,B), cette feuille de luminophore stimulable est balayée par des rayons de stimulation (11) pour transformer ladite image de rayonnement en une lumière (13) émise par ladite feuille de luminophore stimulable (A,B) lors de sa stimulation, les quantités de ladite lumière émise sont lues photoélectriquement (15) et elles sont transformées (15) en signaux d'image, caractérisé en ce que deux feuilles de luminophore stimulable (A,B) ou plus sont exposées au rayonnement transmis à travers l'objet (1) dans des conditions différentes l'une de l'autre de manière à obtenir au moins deux images de rayonnement (4A,4B) dudit objet (1), de sorte qu'au moins une partie de l'information d'image est différente parmi lesdites images de rayonnement (4A,4B) enregistrées sur lesdites feuilles de luminophore stimulable (A,B), les quantités de lumière émise par au moins deux feuilles de luminophore stimulable (A,B) sont transformées (15,16) en signaux d'image numériques, et on effectue la soustraction (17) de ces signaux d'image numériques entre les éléments d'image correspondant desdites images de rayonnement pour obtenir un signal de formation d'une image d'une structure spécifique contenue dans au moins une desdites images de rayonnement, ledit procédé comprenant en outre les opérations suivantes :

(i) lorsque chaque image de rayonnement à traiter par soustraction est enregistrée sur chaque feuille de luminophore stimulable (201),on enregistre simultanément un repère (102A,102B) ayant une configuration telle qu'il fournit un point de référence (102A′,102B′) ou une ligne de référence à ladite feuille de luminophore stimulable (201) dans une position fixe par rapport à ladite image de rayonnement (103′),

(ii) on balaie par des rayons de stimulation (206) ladite feuille de luminophore stimulable (201) dans laquelle est emmagasinée ladite image de rayonnement (103′) et on détecte les coordonnées de position dudit point de référence ou de la dite ligne de référence dudit repère détecté par la lumière émise par la feuille de luminophore stimulable (201),

(iii) on déplace ladite feuille de luminophore stimulable (201) par rapport aux lignes de balayage des rayons de stimulation (206) sur la base des dites coordonnées de position détectées et on corrige ces coordonnées de position à des coordonnées de position prédéterminées par rapport aux dites lignes de balayage des rayons de stimulation, et

(iv) on lit ladite image de rayonnement.

11.- Procédé suivant la revendication 10, dans lequel, lorsque chaque image de rayonnement à traiter par soustraction est enregistrée sur chaque feuille de luminophore stimulable (405), on enregistre simultanément un repère (402) ayant une configuration qui définit au moins une partie de bord de la surface d'image de rayonnement dans une position fixe par rapport à ladite image de rayonnement, et on lit les signaux d'image de cette image de rayonnement par utilisation du signal de détection de ladite partie de bord définie par ledit repère, comme signal de synchronisation.

12.- Procédé suivant l'une quelconque des revendications 1 à 7, 10 et 11 , dans lequel un traitement de réduction de dimension d'image est effectué sur l'image de rayonnement après ou avant l'exécution du dit traitement de soustraction.

13.- Procédé suivant la revendication 12, dans lequel ledit traitement de réduction de dimension d'image est effectué par division de l'image de rayonne:ment, de façon égale, avant le traitement de réduction de dimension d'image, en sections (l,m) ayant une surface supérieure à la surface de chaque élément d'image (i,j) de l'image de rayonnement original,an calcule la moyenne pondérée des données d'image des éléments d'image de l'image de rayonnement par utilisation, comme coefficients de pondération, des surfaces sur lesquelles les sections respectives ainsi obtenues se superposent aux éléments d'image respectifs de l'image de rayonnement originale, et utilisation de la valeur de signal d'image ainsi obtenue comme signaux d'image des éléments d'image de l'image de rayonnement traitée par réduction de dimension.

14.- Procédé suivant l'une quelconque des revendications 1 à 7, 10, 11 et 12, dans lequel, dans une partie non nécessaire apparaissant à la partie périphérique de l'image soustractive obtenue à partir de deux images de rayonnement ou plus du fait de la coïncidence incomplète des deux images de rayonnement ou plus , on crée un cadre d'image de densité arbitraire, de manière à recouvrir ladite partie non nécessaire.

FIG. 1A

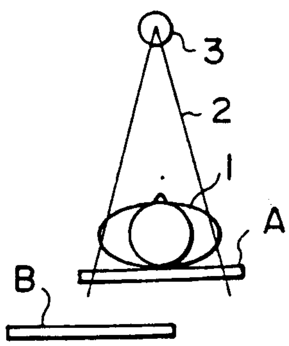


FIG. 1B

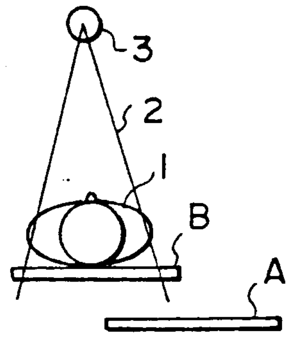


FIG. 1C

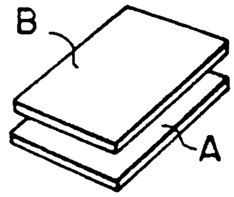


FIG. 2

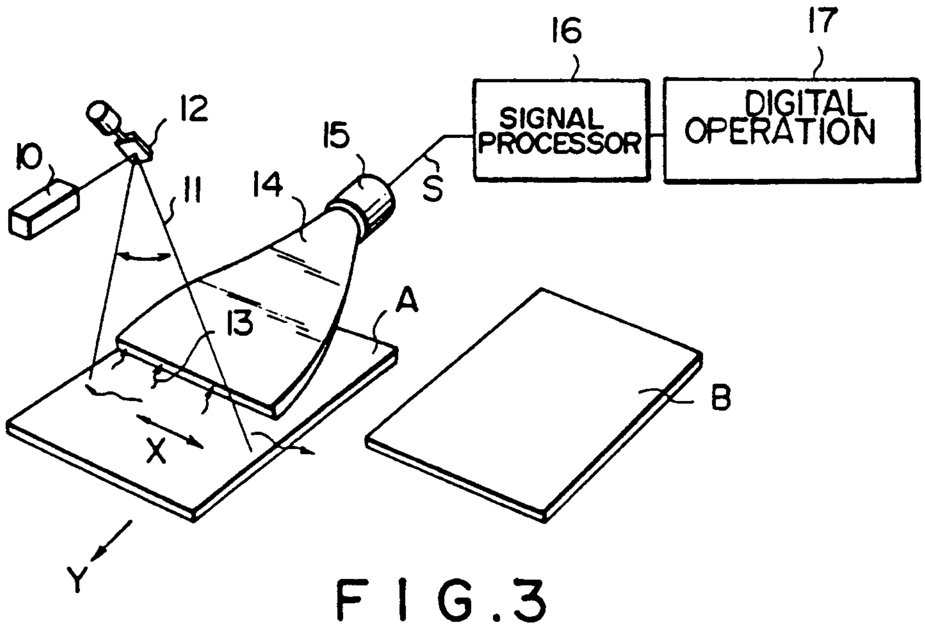


FIG. 3

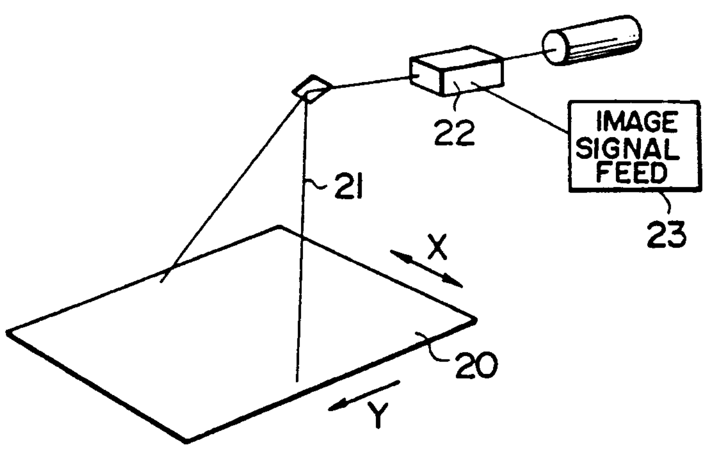

F I G. 4

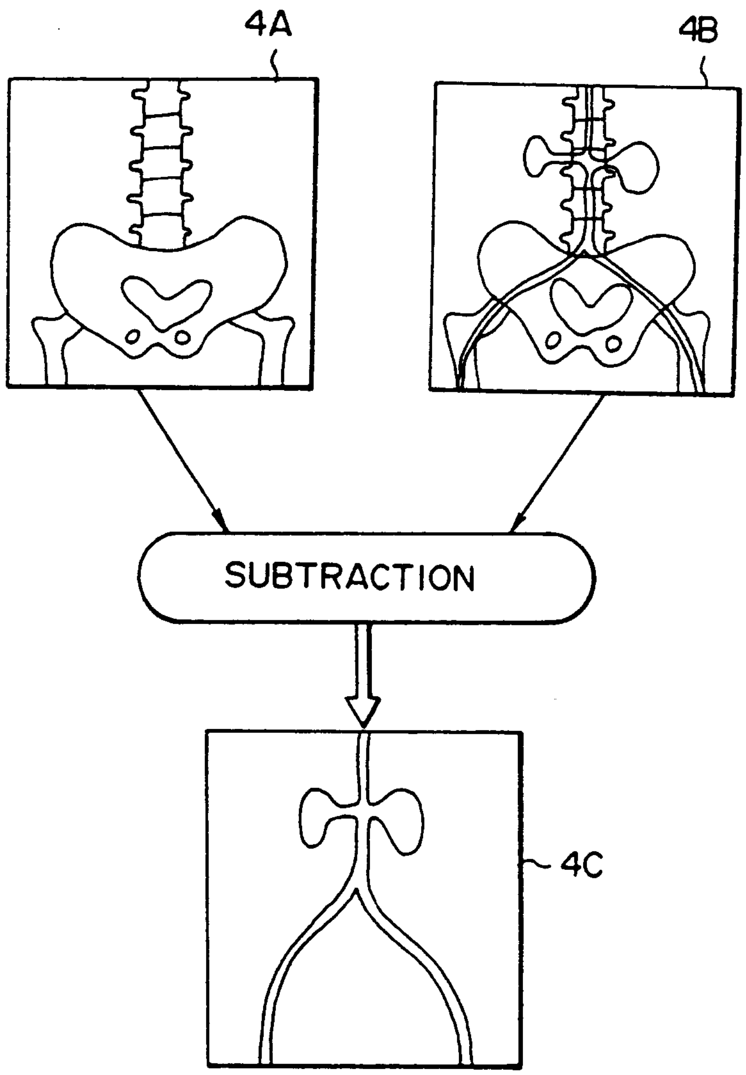

FIG.5

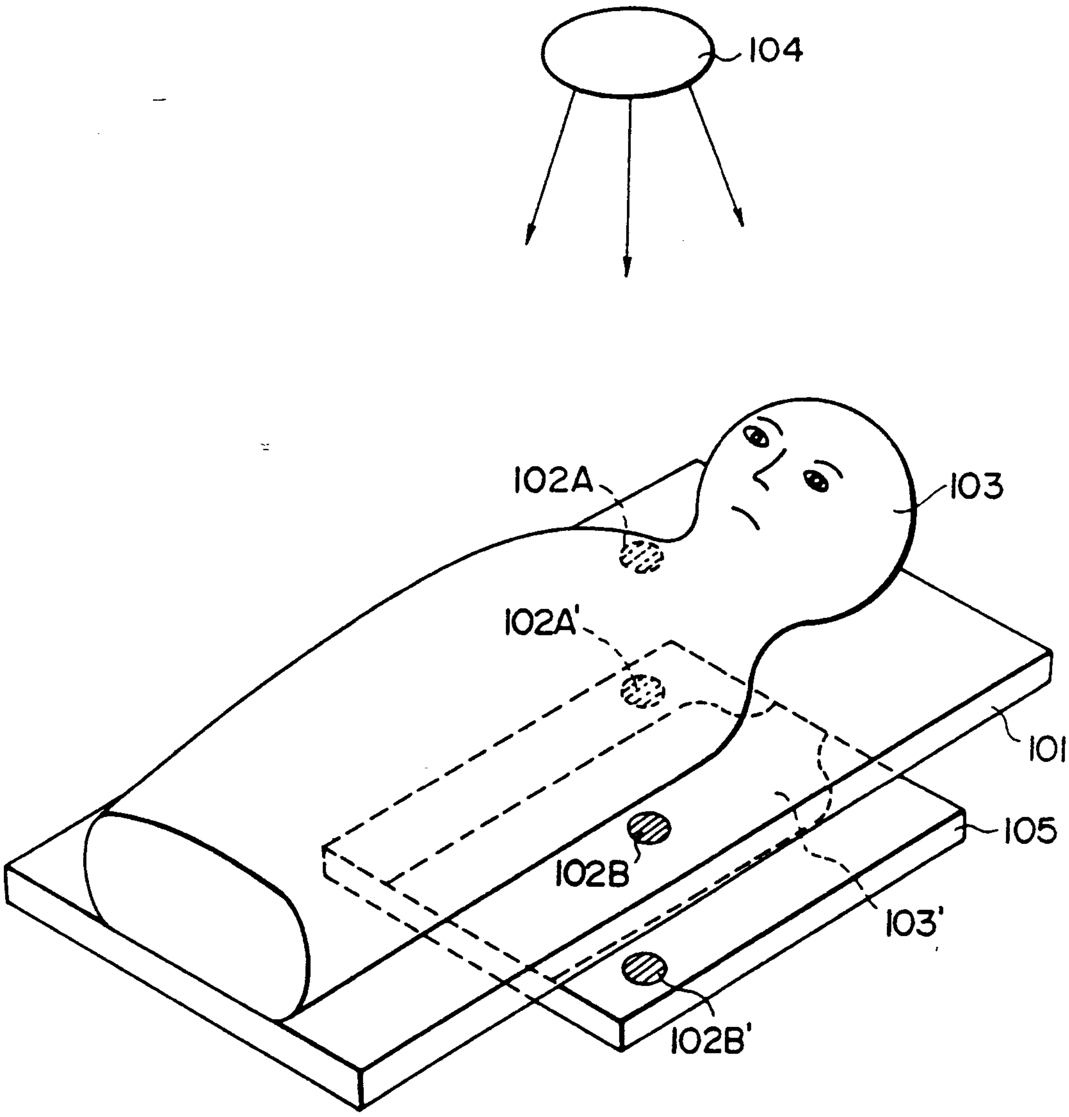


FIG.6

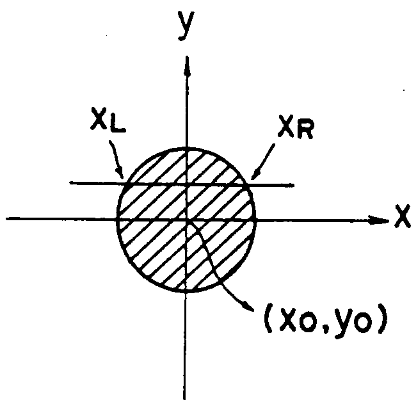


FIG.7

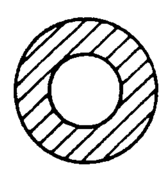

FIG.8

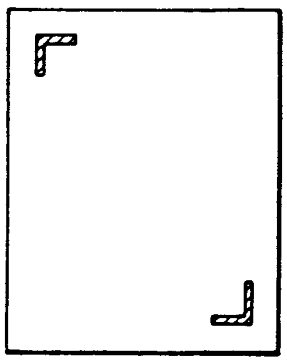

FIG.9

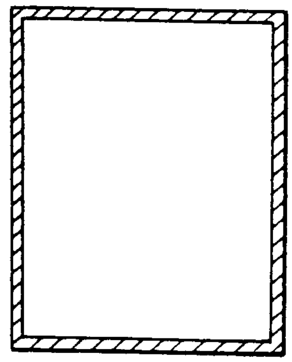

FIG.10

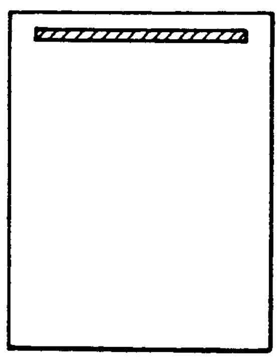

FIG.11

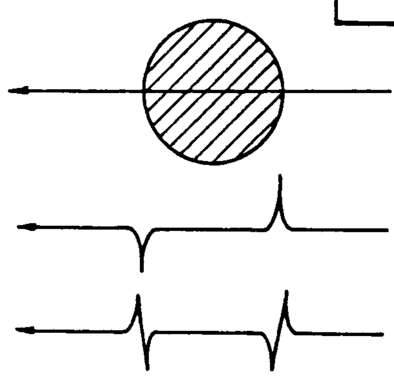

FIG.12

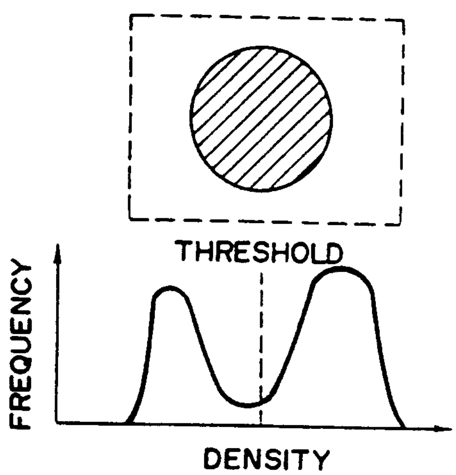

F I G.13

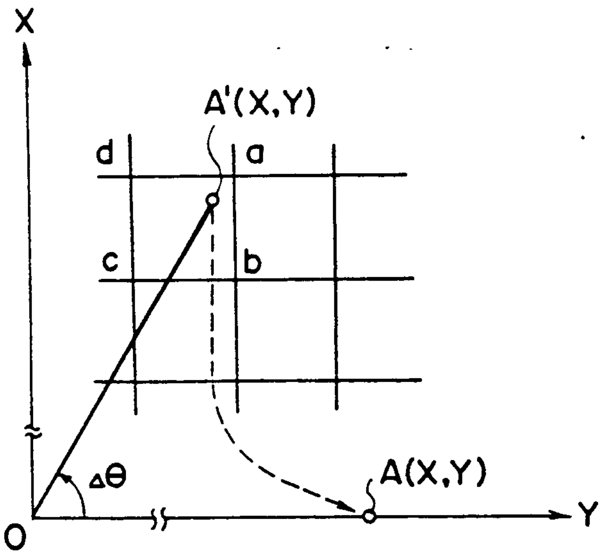


F I G.14

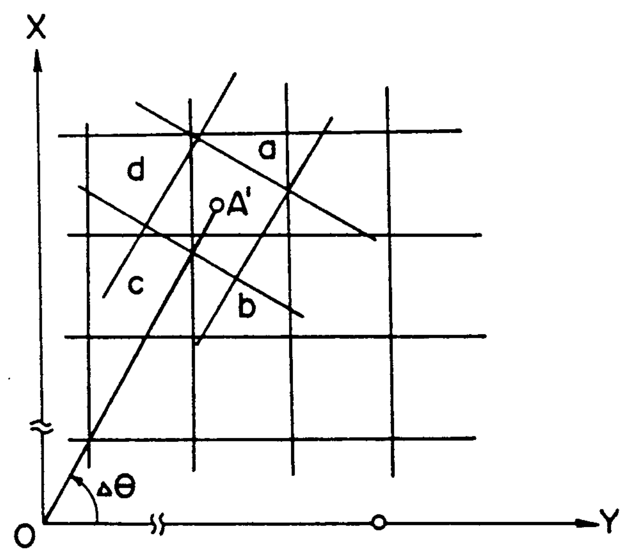


F I G.15

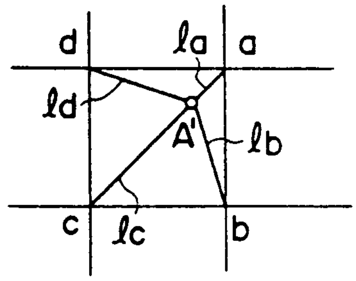


F I G.16A

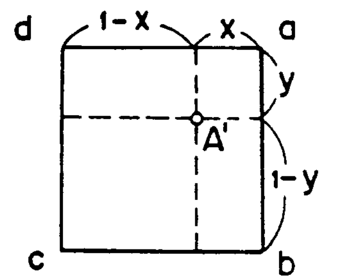


F I G.16B

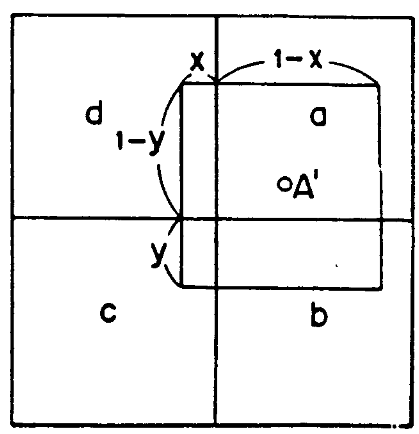

FIG.17

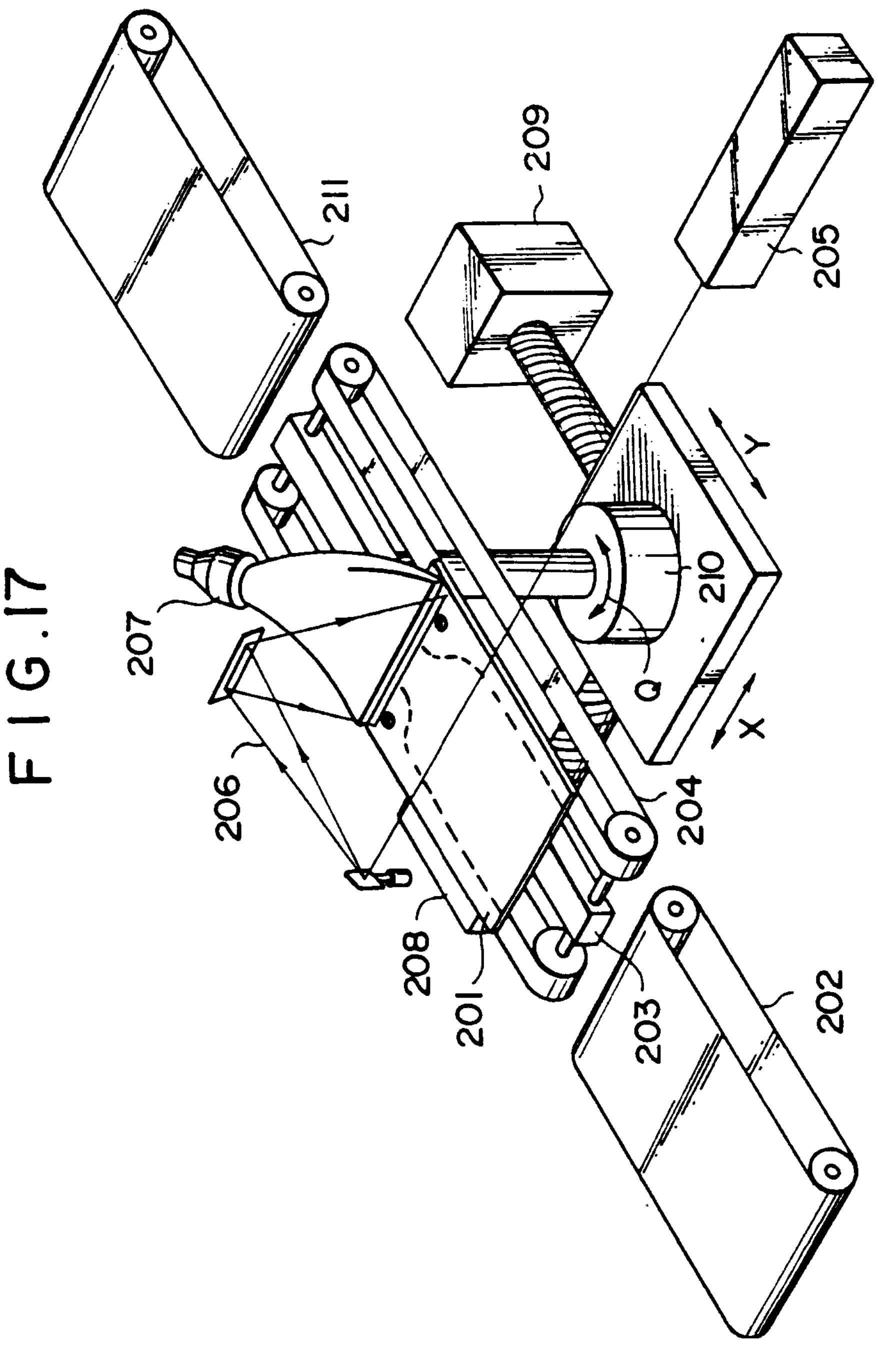

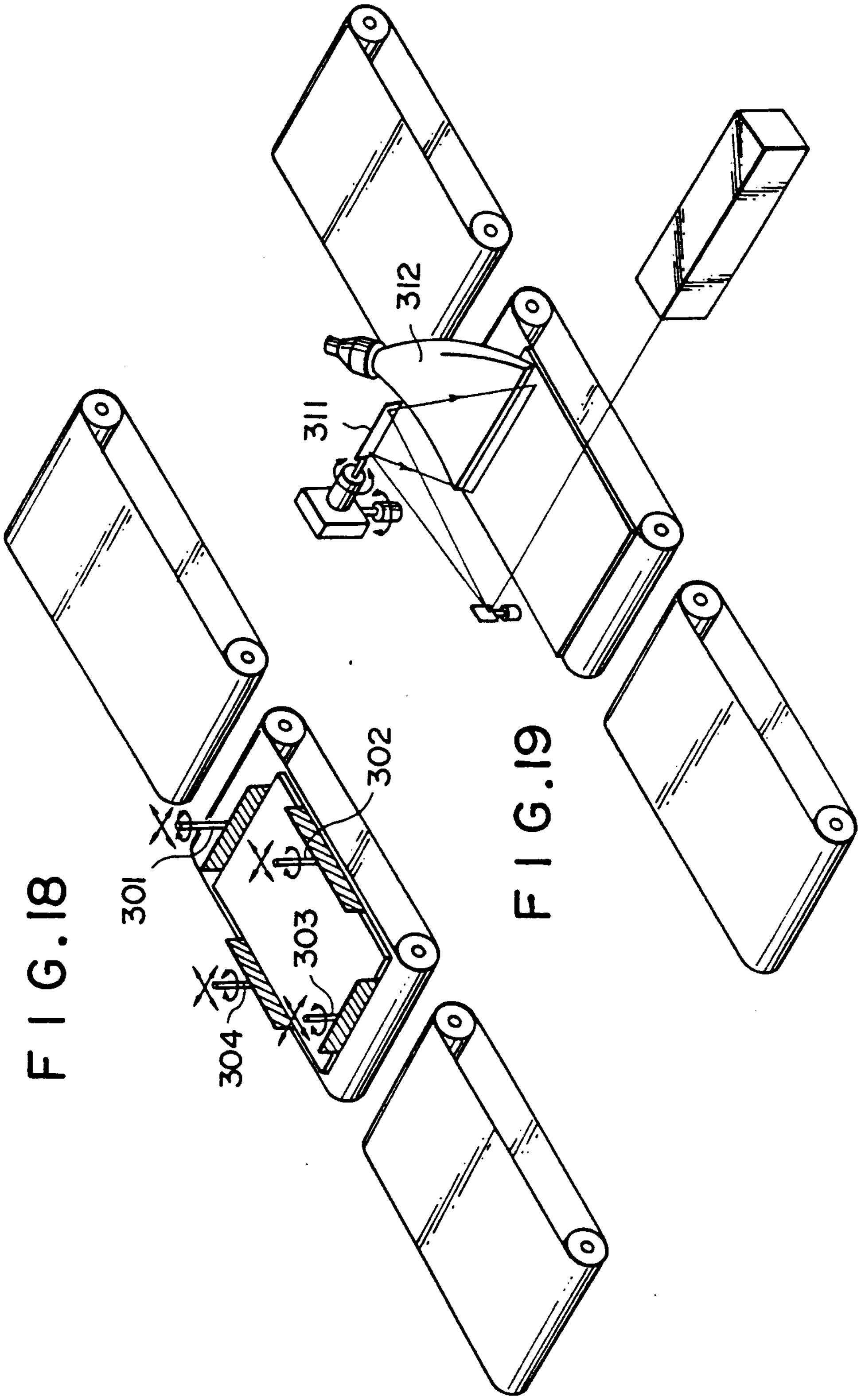


FIG. 18

FIG. 19

FIG.20

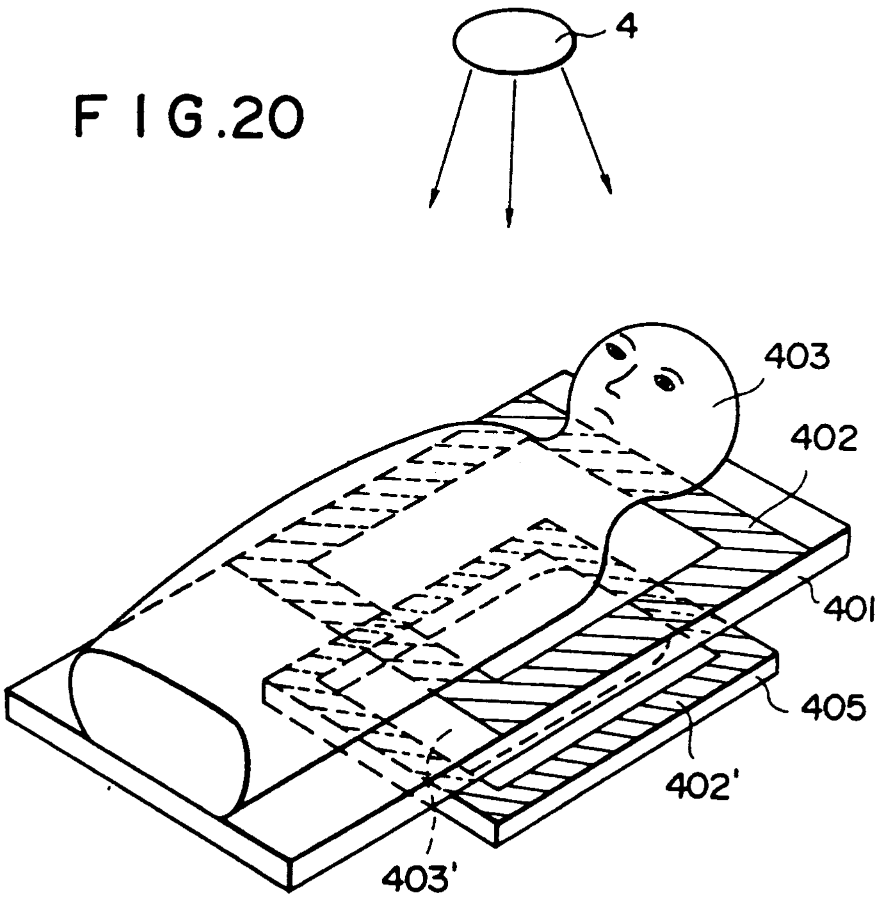
4
403
402
401
405
402'
403'

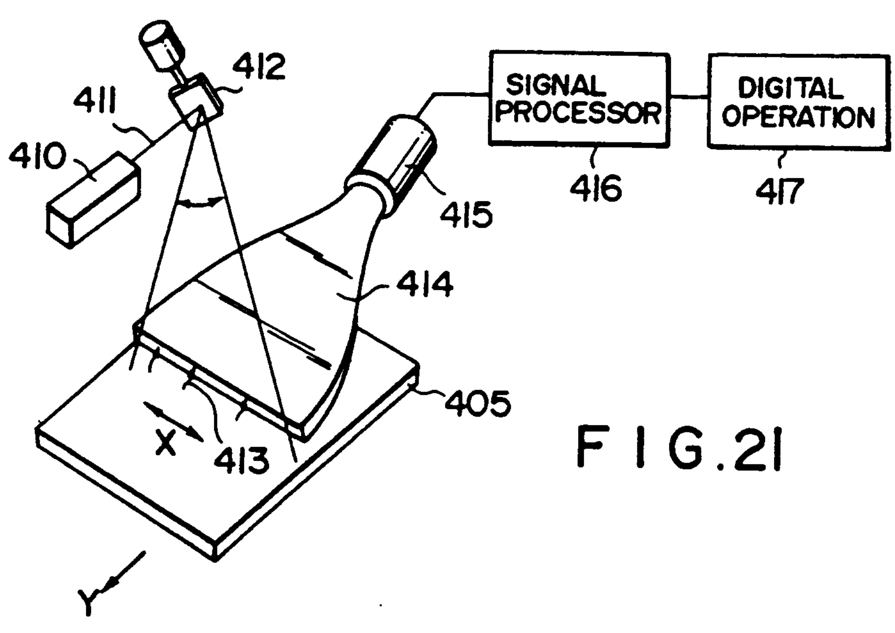
412
411
410
SIGNAL PROCESSOR
DIGITAL OPERATION
416
417
415
414
405
X
413
Y

FIG.21

FIG.22A

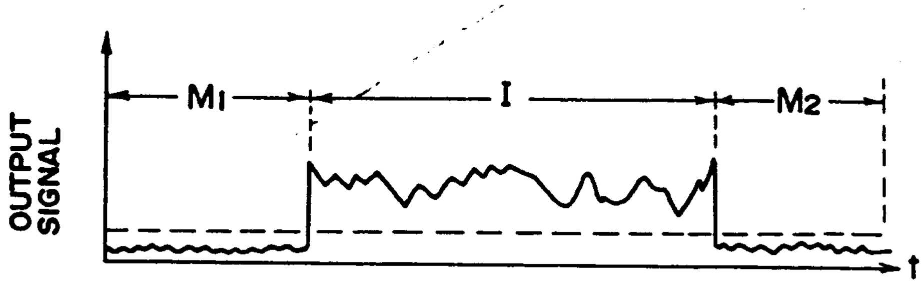


FIG.22B

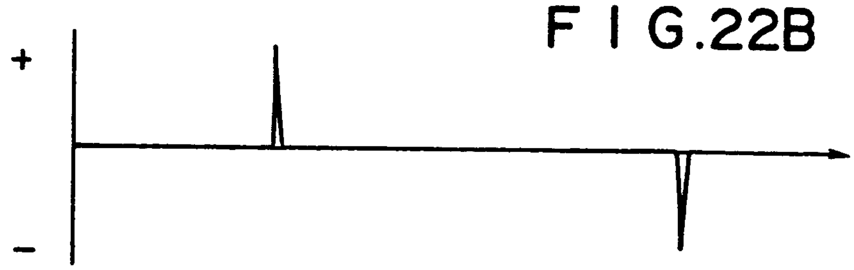


FIG.23

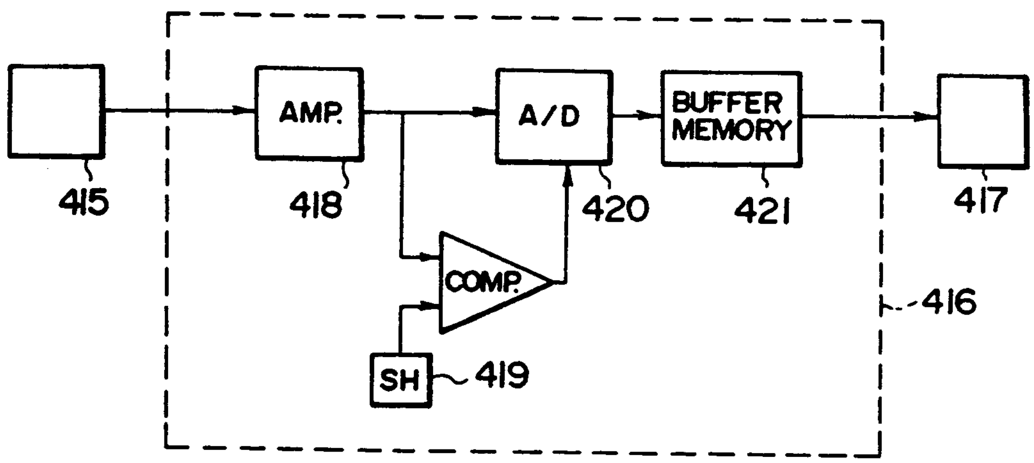

FIG.24A

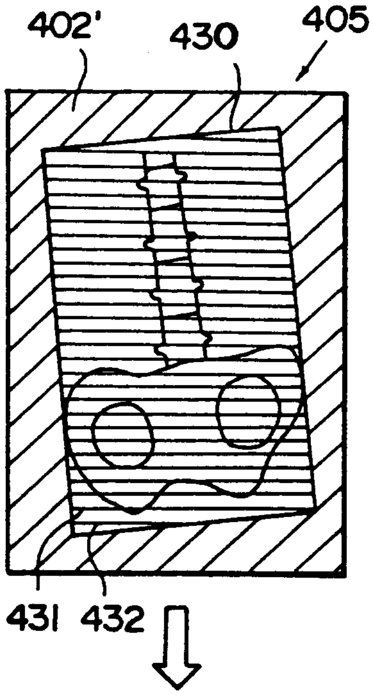


FIG.24B

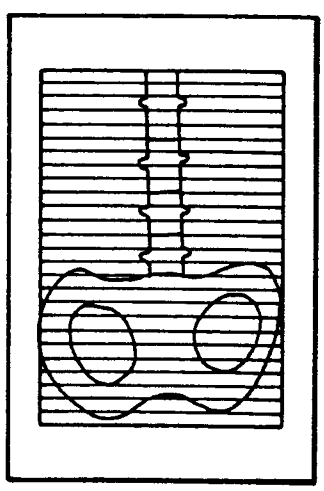

FIG.27A

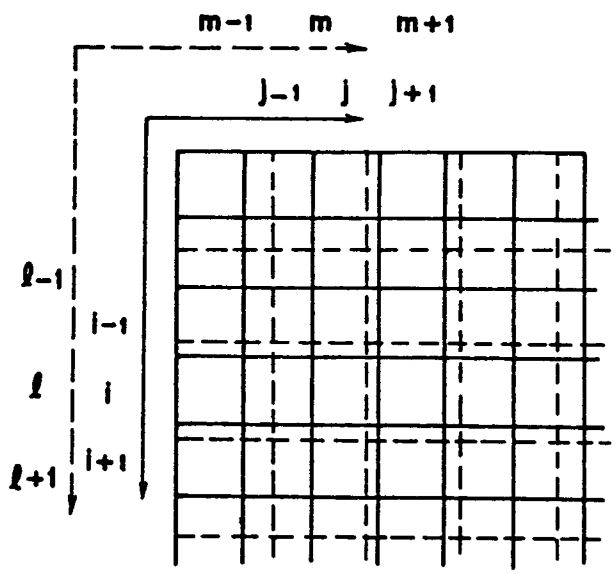


FIG.27B

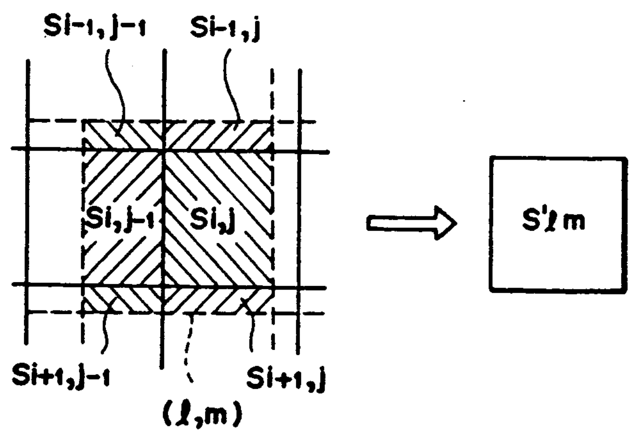

F I G. 25

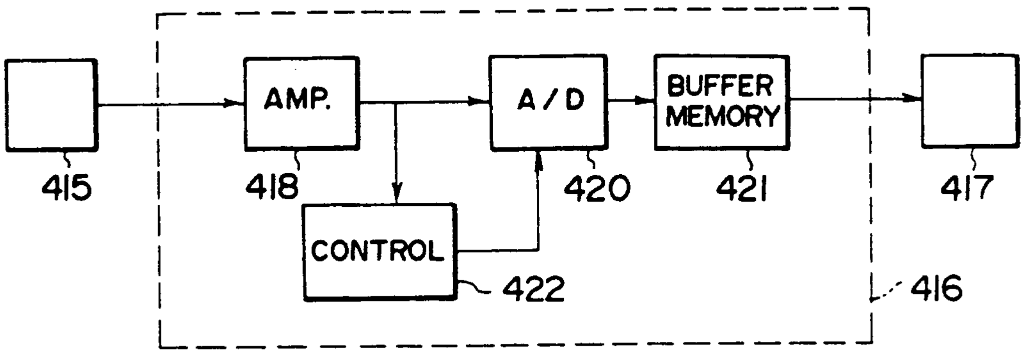


F I G. 26A

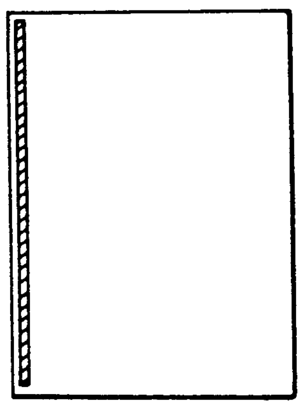

F I G. 26B

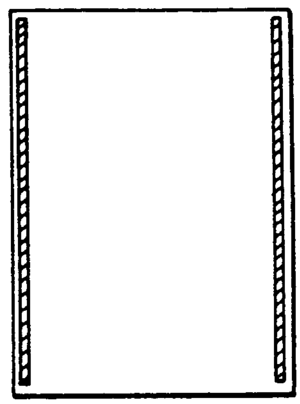

F I G. 26C

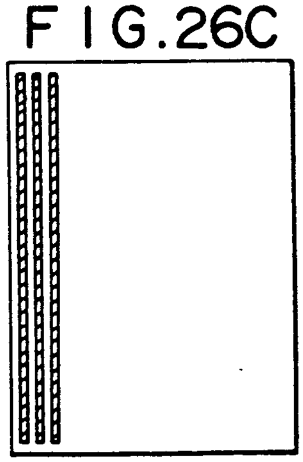

F I G.28

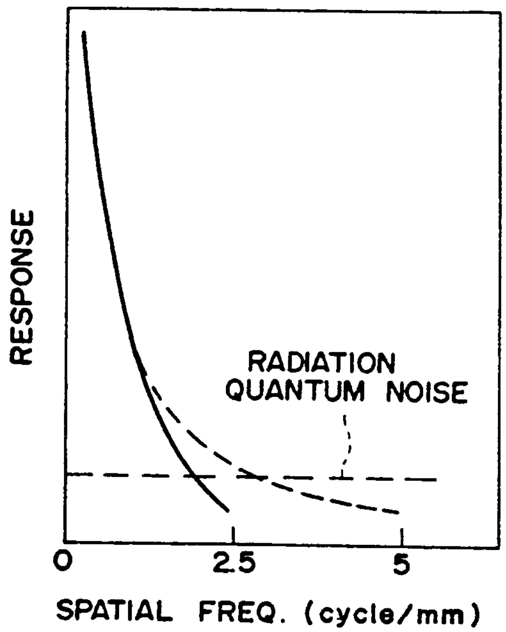


F I G.29A

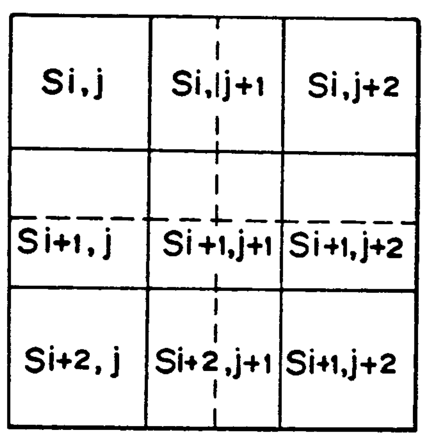


F I G.29B

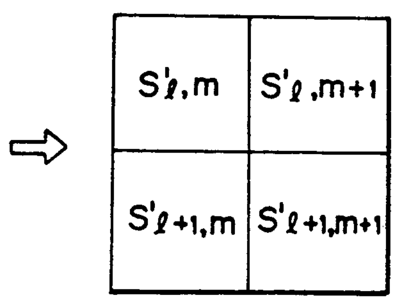

FIG.30A

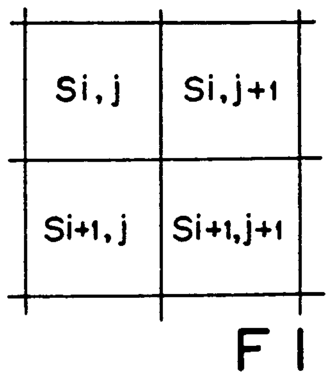


FIG.30B

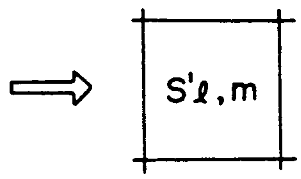


FIG.31

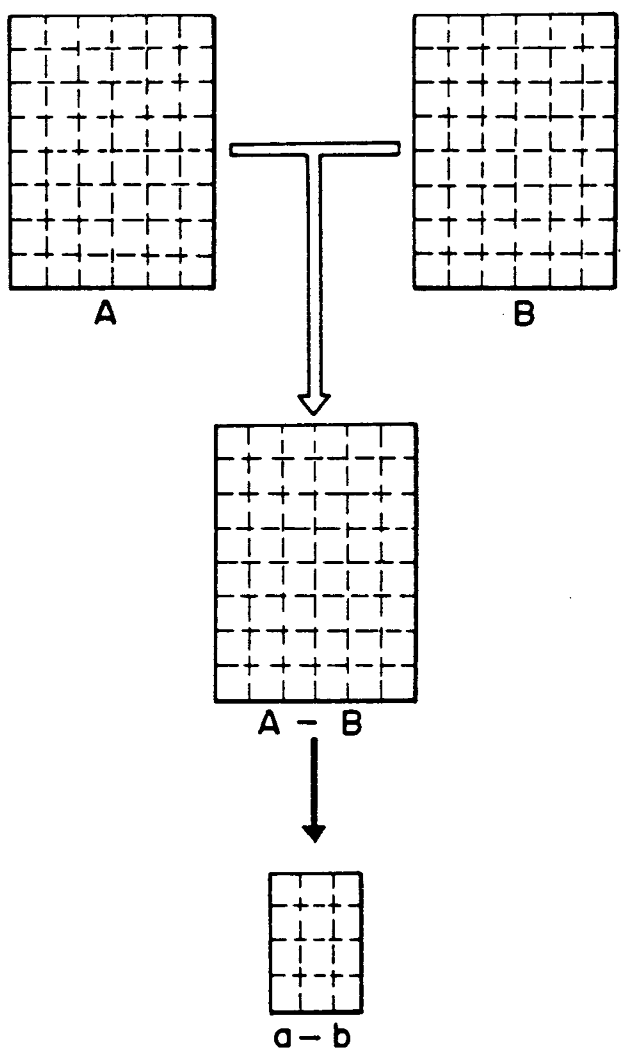

F I G.32

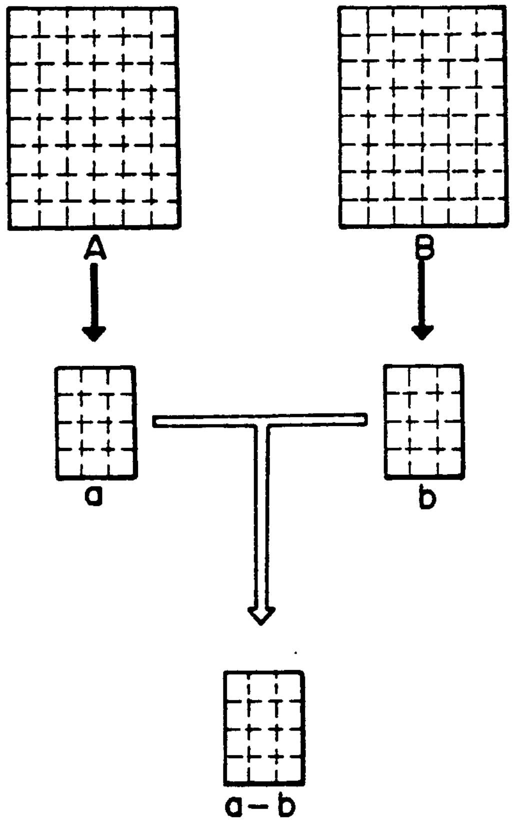


F I G.34

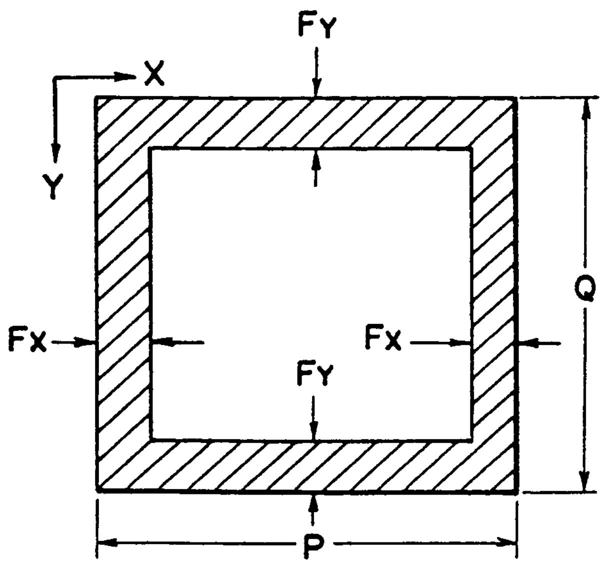

FIG.33

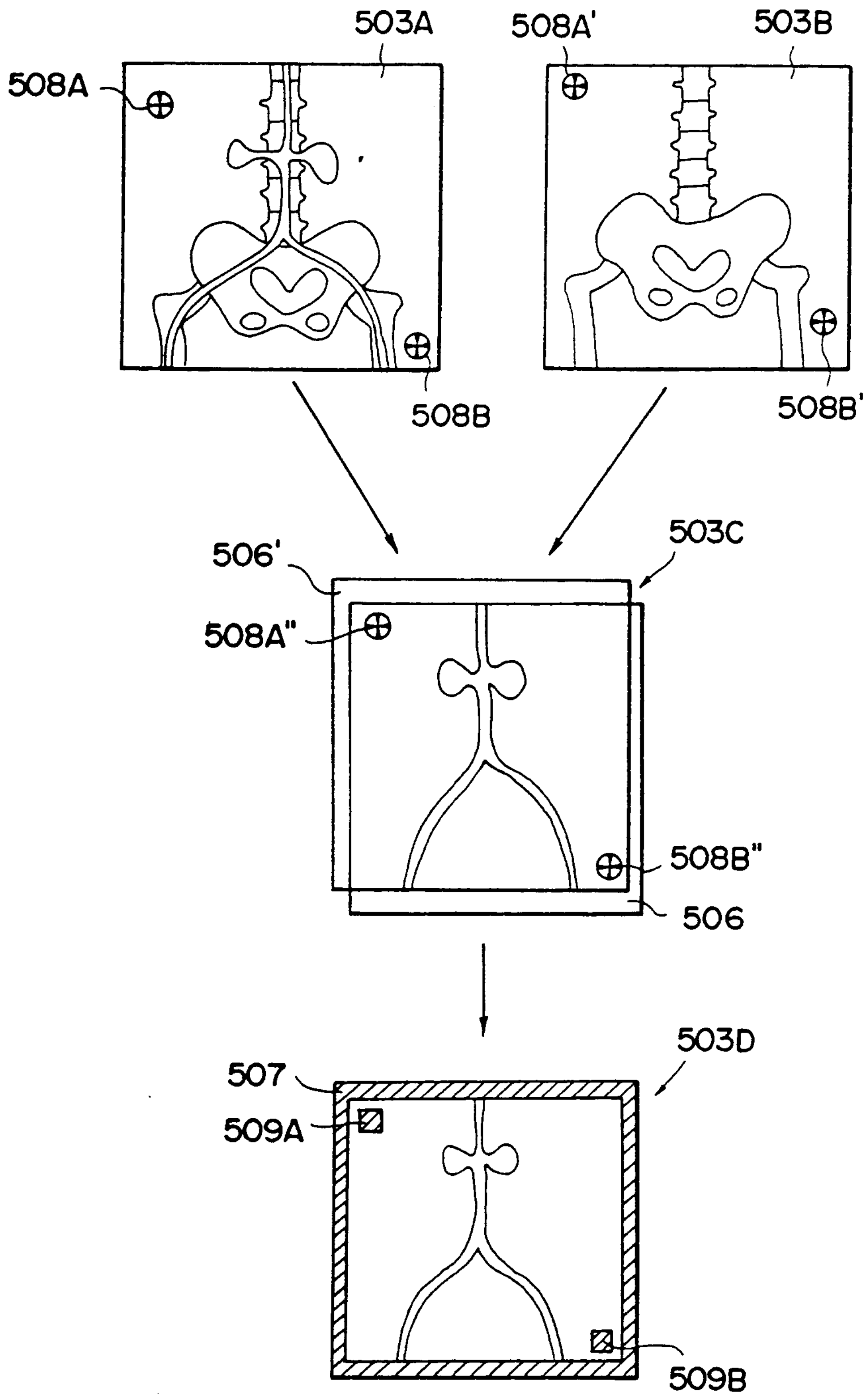
503A
508A'
503B
508A
508B
508B'
506'
503C
508A"
508B"
506
503D
507
509A
509B